# EUROPÄISCHE PATENTSCHRIFT

(11) **EP 3 159 584 B1**
(45) Veröffentlichungstag und Bekanntmachung des Hinweises auf die Patenterteilung: **06.06.2018**
(21) Anmeldenummer: 16193567.1
(22) Anmeldetag: 12.10.2016
(51) Int. Cl.: F16K 17/04, F16K 24/04, F16K 27/02

(54) **VENTILANORDNUNG**
VALVE ASSEMBLY
SYSTÈME DE VANNES

(30) Priorität: 20.10.2015 DE 102015220396
(43) Veröffentlichungstag der Anmeldung: 26.04.2017
(73) Patentinhaber: aft automotive GmbH, 48268 Greven-Reckenfeld (DE)
(72) Erfinder: May, Thomas, 48565 Steinfurt (DE)
(74) Vertreter: Dietz, Christopher Friedrich

(56) Entgegenhaltungen:
- DE-A1- 10 013 448
- DE-A1-102010 027 787
- US-A1- 2005 155 191
- US-A1- 2009 159 465
- US-A1- 2013 139 912

## Beschreibung

Die Erfindung betrifft eine Ventilanordnung mit einem Ventilgehäuse, in dem ein von einer Feder federkraftbeaufschlagtes Ventilelement bezüglich eines einen Ventilsitz aufweisenden Ventilsitzelements verlagerbar angeordnet ist, das in einer Geschlossenstellung mit dem Ventilsitz zum Unterbrechen einer Strömungsverbindung durch das Ventilgehäuse zusammenwirkt und die Strömungsverbindung in einer Offenstellung freigibt, wobei sich die Feder an einem in dem Ventilgehäuse angeordneten Federhalter abstützt.
Zur Steuerung und Regelung von Fluidströmen, zum Beispiel in Druckölkreisläufen von Brennkraftmaschinen, können unterschiedliche Ventile beziehungsweise Ventilanordnungen zum Einsatz kommen. Diese Ventilanordnungen werden an einer fluidtechnischen Einrichtung nachträglich montiert, sodass einerseits eine klare Schnittstelle zwischen der Ventilanordnung und der fluidtechnischen Einrichtung und andererseits eine Möglichkeit zum Prüfen der Ventilanordnung gegeben sind. Die Werkstoffe für die Ventilanordnung und die fluidtechnische Einrichtung können grundsätzlich beliebig gewählt sein. Insbesondere wenn für die Ventilanordnung und die fluidtechnische Einrichtung unterschiedliche Werkstoffe verwendet werden, also beispielsweise die aus einem ersten Material bestehende Ventilanordnung an einem aus einem von dem ersten Material verschiedenen zweiten Material bestehenden Bereich der fluidtechnischen Einrichtung befestigt wird, stellen die unterschiedlichen Werkstoffeigenschafen hohe Anforderungen an die Zuverlässigkeit der Verbindung zwischen der Ventilanordnung und der fluidtechnischen Einrichtung. So können zum Beispiel aufgrund unterschiedlicher Wärmeausdehnungen von Ventilanordnung und fluidtechnischer Einrichtung Wärmespannungen auftreten, welche die Funktionsfähigkeit der Ventilanordnung beeinflussen, insbesondere bei einer stoffschlüssigen Befestigung der Ventilanordnung an der fluidtechnischen Einrichtung. Ein Ventilanordnung gemäß dem Oberbegriff des Anspruchs 1 ist aus dem Dokument DE 10 2010 027 787 A1 bekannt. Es ist daher Aufgabe der Erfindung, eine Ventilanordnung vorzuschlagen, welche gegenüber bekannten Ventilanordnungen Vorteile aufweist, insbesondere eine schnelle und zuverlässige Montage der Ventilanordnung an der fluidtechnischen Einrichtung ermöglicht, welche insbesondere auch bei unterschiedlichen Materialien der Ventilanordnung und der fluidtechnischen Einrichtung eine zuverlässige und dauerhafte Verbindung zwischen der Ventilanordnung und der fluidtechnischen Einrichtung sicherstellt.

Dies wird erfindungsgemäß mit einer Ventilanordnung mit den Merkmalen des Anspruchs 1 erreicht. Dabei ist vorgesehen, dass das Ventilgehäuse Hintergriffsrastelemente aufweist, mittels welchen die Ventilanordnung in einer Aufnahmeöffnung einer fluidtechnischen Einrichtung rastend befestigbar ist, wobei die Hintergriffsrastelemente in radialer Richtung bezüglich einer Längsmittelachse des Ventilgehäuses zwischen einer Raststellung, in der sie ein der Aufnahmeöffnung zugeordnetes Rastgegenelement hintergreifen, und einer Montagestellung, in der sie außer Eingriff mit dem Rastgegenelement stehen, elastisch verlagerbar sind, wobei die Hintergriffsrastelemente mittels einer Fixiervorrichtung in der Raststellung festsetzbar sind.

Die Ventilanordnung weist das Ventilgehäuse auf, welches an der fluidtechnischen Einrichtung befestigbar sein soll. In dem Ventilgehäuse ist das Ventilelement verlagerbar angeordnet, insbesondere verlagerbar gelagert, vorzugsweise in axialer Richtung. Das Ventilelement wirkt in einer ersten Stellung, nämlich der Geschlossenstellung, mit dem Ventilsitz zusammen, um die Strömungsverbindung durch das Ventilgehäuse zu unterbrechen. Hierzu liegt beispielsweise das Ventilelement in der Geschlossenstellung dicht an dem Ventilsitz an. In der Geschlossenstellung kann insoweit ein auf einer Seite des Ventilsitzes vorliegendes Fluid nicht zwischen dem Ventilelement und dem Ventilsitz hindurch und mithin durch das Ventilgehäuse hindurch strömen. Es kann selbstverständlich auch vorgesehen sein, dass in der Geschlossenstellung ein bestimmter erster Durchströmungsquerschnitt freigegeben ist, sodass also auch in der Geschlossenstellung Fluid zwischen dem Ventilelement und dem Ventilsitz hindurch strömen kann. Bei einer derartigen Ausgestaltung der Ventilanordnung kann die Geschlossenstellung auch als Drosselstellung bezeichnet werden.

In einer zweiten Stellung, nämlich der Offenstellung, ist die Strömungsverbindung durch das Ventilgehäuse dagegen freigegeben beziehungsweise weiter freigegeben als in der Geschlossenstellung. Hierzu liegt beispielsweise das Ventilelement beabstandet beziehungsweise weiter beabstandet von dem Ventilsitz beziehungsweise dem Ventilsitzelement vor, sodass das Fluid zwischen dem Ventilelement und dem Ventilsitz hindurch strömen kann. Entsprechend kann das Fluid auch das Ventilgehäuse durchströmen. Allgemein ausgedrückt liegt in der Geschlossenstellung ein bestimmter erster Durchströmungsquerschnitt und in der Offenstellung ein bestimmter zweiter Durchströmungsquerschnitt durch die Ventilanordnung beziehungsweise zwischen dem Ventilelement und dem Ventilsitz vor, wobei der zweite Durchströmungsquerschnitt größer ist als der erste Durchströmungsquerschnitt. Unter dem im Rahmen dieser Beschreibung verwendeten Begriff "Durchströmungsquerschnitt" ist bevorzugt der entlang der Hauptströmungsrichtung des Fluids durch die Ventilanordnung kleinste Durchströmungsquerschnitt zu verstehen.

Das Ventilelement ist vorzugsweise mit der Federkraft beaufschlagt, welches mittels der sich an dem Federhalter abstützenden Feder bereitgestellt wird. Die Feder greift also einerseits an dem Ventilelement und andererseits an dem Federhalter an. Der Federhalter ist strömungsdurchgängig, behindert die Fluidströmung durch die Ventilanordnung beziehungsweise das Ventilgehäuse also nicht oder zumindest nicht nennenswert. Beispielsweise ist die Feder als Druckfeder ausgebildet, sodass sie das Ventilelement von dem Federhalter fortdrängt. Auch eine Ausgestaltung als Zugfeder ist alternativ selbstverständlich realisierbar. Bevorzugt ist es vorgesehen, dass die Feder das Ventilelement in Richtung des Ventilsitzes beziehungsweise in diesen hineindrängt. In diesem Fall ist die Ventilanordnung beispielsweise als Rückschlagventilanordnung ausgestaltet. Die Feder liegt beispielsweise als Schraubenfeder vor. Auch andere Ausführungsformen der Feder sind jedoch realisierbar.

Das bedeutet, dass die Ventilanordnung die Strömungsverbindung lediglich freigibt, wenn eine Fluidströmung des Fluids durch die Ventilanordnung in einer bestimmten Richtung vorliegt und dabei gleichzeitig das Fluid auf das Ventilelement eine Fluidkraft ausübt, welche die von der Feder erzeugte Federkraft, mit welcher das Ventilelement in den Ventilsitz gedrängt wird, übersteigt. In diesem Fall wird das Ventilelement durch die Fluidkraft aus dem Ventilsitz herausverlagert, nämlich in Richtung der Offenstellung, sodass die Strömungsverbindung durch das Ventilgehäuse freigegeben wird. Fällt die Fluidkraft dagegen unter die Federkraft beziehungsweise liegt die Fluidströmung in einer entgegengesetzten Richtung vor, so drängen die Federkraft und/oder die Fluidkraft das Ventilelement in den Ventilsitz hinein, sodass das Ventilelement in der Geschlossenstellung vorliegt. Entsprechend wird die Strömungsverbindung durch das Ventilgehäuse unterbrochen.

Die Befestigung der Ventilanordnung beziehungsweise des Ventilgehäuses an der fluidtechnischen Einrichtung ist mithilfe der Hintergriffsrastelemente vorgesehen. Diese dienen der rastenden Befestigung der Ventilanordnung in der Aufnahmeöffnung der fluidtechnischen Einrichtung. Die Aufnahmeöffnung liegt beispielsweise in einer Wand der fluidtechnischen Einrichtung vor, wobei ein Rand der Aufnahmeöffnung vorzugsweise eine konstante Stärke aufweist, bevorzugt in Normalenrichtung zu der Aufnahmeöffnung beziehungsweise zu einer die Aufnahmeöffnung definierenden gedachten Ebene, die insbesondere den gesamten Rand der Aufnahmeöffnung aufnimmt. Die Wand liegt beispielsweise in Form eines Blechs, insbesondere eines Metallblechs, vor.

Die Hintergriffsrastelemente sind derart ausgestaltet, dass sie bei ihrem Einbringen beziehungsweise einem Einbringen des Ventilgehäuses in die Aufnahmeöffnung den Rand der Aufnahmeöffnung hintergreifen und somit in der fluidtechnischen Einrichtung vorliegen. Das Einbringen der Ventilanordnung in die Aufnahmeöffnung während der Montage ist in einer Montagerichtung vorgesehen. Die Montagerichtung liegt beispielsweise im Wesentlichen senkrecht zu der Aufnahmeöffnung beziehungsweise der gedachten Ebene vor.

Auf der den Hintergriffsrastelementen abgewandten Seite der Aufnahmeöffnung beziehungsweise des Rands der Aufnahmeöffnung kann ein Gegenlager des Ventilgehäuses vorgesehen sein, sodass nach der Anordnung der Ventilanordnung in der Aufnahmeöffnung der Rand der Aufnahmeöffnung einerseits an den Hintergriffsrastelementen und andererseits an dem Gegenlager anliegt. Der Rand der Aufnahmeöffnung ist mithin zwischen den Hintergriffsrastelementen einerseits und dem Gegenlager andererseits gehalten, insbesondere klemmend gehalten. Beispielsweise ist der Abstand zwischen den Hintergriffsrastelementen und dem Gegenlager an dem Ventilgehäuse derart gewählt, dass er der Stärke des Rands der Aufnahmeöffnung im Wesentlichen entspricht. Hierbei können selbstverständlich zusätzlich Abmessungen einer Dichtung berücksichtigt werden, welche zwischen dem Ventilgehäuse und der fluidtechnischen Einrichtung, insbesondere dem Rand der Aufnahmeöffnung, angeordnet ist, insbesondere klemmend gehalten ist. Die Dichtung kann dabei an dem Gegenlager anliegen, also zwischen der fluidtechnischen Einrichtung und dem Gegenlager vorliegen, oder das Gegenlager selbst ausbilden oder zumindest mit ausbilden.

Die Hintergriffsrastelemente sind in radialer Richtung elastisch verlagerbar, nämlich zwischen der Raststellung und der Montagestellung. In der Raststellung sind die Hintergriffsrastelemente derart angeordnet, dass sie das der Aufnahmeöffnung zugeordnete Rastgegenelement, beispielsweise den Rand der Aufnahmeöffnung, hintergreifen und mithin ein Herausnehmen des Ventilgehäuses aus der Aufnahmeöffnung entgegen der Montagerichtung verhindern. In der Montagestellung sind sie dagegen derart angeordnet, dass sie mit dem Rastgegenelement außer Eingriff stehen. Beispielsweise stellt die Raststellung eine Ausgangsstellung der Hintergriffsrastelemente dar oder liegt zumindest näher an dieser als die Montagestellung. Vor dem Einbringen des Ventilgehäuses in die Aufnahmeöffnung liegen die Hintergriffsrastelemente in ihrer Ausgangsstellung vor.

Zum Einbringen beziehungsweise während des Einbringens werden die Hintergriffsrastelemente aus der Ausgangsstellung in radialer Richtung verlagert, nämlich in Richtung der Montagestellung oder in die Montagestellung. Werden die Hintergriffsrastelemente aus der Ausgangsstellung heraus verlagert, so werden sie aufgrund ihrer elastischen Verlagerbarkeit stets in Richtung der Ausgangsstellung zurückgedrängt. Das bedeutet, dass nach dem Einbringen des Ventilgehäuses in die Aufnahmeöffnung beziehungsweise dem Anordnen des Ventilgehäuses in einer Montageposition bezüglich der Aufnahmeöffnung, die Hintergriffsrastelemente wieder in Richtung ihrer Ausgangsstelle gedrängt werden und dabei in die Raststellung gelangen. Insoweit ist zunächst ein Einklipsen der Ventilanordnung beziehungsweise des Ventilgehäuses in die Aufnahmeöffnung der fluidtechnischen Einrichtung vorgesehen. Nach dem Einklipsen liegen die Hintergriffsrastelemente in der Raststellung vor, sodass das Ventilgehäuse bereits bezüglich der fluidtechnischen Einrichtung gehalten ist.

Um jedoch die Ventilanordnung bezüglich der fluidtechnischen Einrichtung endgültig und insbesondere dauerhaft festzusetzen, ist die Fixiervorrichtung vorgesehen. Diese dient dazu, die Hintergriffsrastelemente in der Raststellung festzusetzen, sobald das Ventilgehäuse in seiner Montageposition in der Aufnahmeöffnung angeordnet ist. Beispielsweise wird also die Fixiervorrichtung betätigt, sobald das Ventilgehäuse in der Montageposition vorliegt. Hierdurch erfolgt das Festsetzen der Hintergriffsrastelemente in ihrer Raststellung. Die Fixiervorrichtung verhindert nachfolgend, dass die Hintergriffsrastelemente aus der Raststellung herausgelangen, insbesondere bis in die Montagestellung. Das bedeutet, dass das Ventilgehäuse endgültig und dauerhaft an der fluidtechnischen Einrichtung, insbesondere in der Aufnahmeöffnung, festgesetzt ist. Beispielsweise liegt die Fixiervorrichtung in ihrer Fixierstellung in radialer Richtung an den Hintergriffsrastelementen an, sodass diese nicht in Richtung der Fixiervorrichtung und entsprechend in Richtung der Montagestellung verlagert werden können.

Eine derartige Ausgestaltung der Ventilanordnung ermöglicht eine einfach herstellbare und dennoch dauerhafte Befestigung der Ventilanordnung an der fluidtechnischen Einrichtung. Aufgrund der rastenden Befestigung mithilfe der Hintergriffsrastelemente wird zugleich ein gewisses Spiel zwischen der Ventilanordnung und der fluidtechnischen Einrichtung zugelassen, sodass ohne Dichtigkeitsverlust thermische Spannungen, die beispielsweise aufgrund von Materialunterschieden zwischen der Ventilanordnung und der fluidtechnischen Einrichtung auftreten, ausgeglichen werden können.

Eine weitere bevorzugte Ausführungsform der Erfindung sieht vor, dass die Fixiervorrichtung in axialer Richtung zwischen einer Freigabestellung, in der eine radiale Verlagerung der Hintergriffsrastelemente in die Montagestellung zugelassen ist, und einer Fixierstellung, in der die Hintergriffsrastelemente in radialer Richtung festgesetzt sind, verlagerbar ist. Die Fixiervorrichtung kann in mehreren Stellungen angeordnet werden, insbesondere in der Freigabestellung und der Fixierstellung. Hierzu ist sie in axialer Richtung bezüglich der Längsmittelachse des Ventilgehäuses verlagerbar, insbesondere in dem Ventilgehäuse. Bevorzugt ist die Fixiervorrichtung in axialer Richtung verlagerbar in dem Ventilgehäuse gelagert beziehungsweise geführt. Beispielsweise greift sie hierzu wenigstens bereichsweise an einer Innenumfangsfläche des Ventilgehäuses an beziehungsweise liegt an dieser an.

In der Freigabestellung ist die Fixiervorrichtung derart angeordnet, dass sie die radiale Verlagerung der Hintergriffsrastelemente in der Montagestellung zulässt. Beispielsweise ist sie hierzu in axialer Richtung von den Hintergriffsrastelementen beabstandet angeordnet, wobei der Abstand zwischen der Fixiervorrichtung und den Hintergriffsrastelementen derart gewählt ist, dass die Hintergriffsrastelemente weiterhin in radialer Richtung verlagerbar sind, vorzugsweise in dem gesamten Bereich ausgehend von der Raststellung bis hin zu der Montagestellung. In der Fixierstellung soll dagegen die Fixiervorrichtung die Hintergriffsrastelemente festsetzen, nämlich insbesondere in radialer Richtung.

Darunter ist insbesondere zu verstehen, dass die Fixiervorrichtung eine Verlagerung der Hintergriffsrastelemente aus der Raststellung heraus unterbindet, zumindest jedoch eine Verlagerung der Hintergriffsrastelemente in die Montagestellung hinein. Die Fixiervorrichtung soll insoweit in ihrer Fixierstellung die Hintergriffsrastelemente in radialer Richtung derart festsetzen, dass die Hintergriffsverbindung zwischen den Hintergriffsrastelementen und der fluidtechnischen Einrichtung, insbesondere dem Rastgegenelement, aufrechterhalten wird. Solange die Fixiervorrichtung also in der Fixierstellung vorliegt, ist das Ventilgehäuse und mithin die Ventilanordnung nicht von der fluidtechnischen Einrichtung lösbar.

Eine besonders bevorzugte Ausführungsform der Erfindung sieht vor, dass der Federhalter oder das Ventilsitzelement als Fixiervorrichtung vorliegt, wobei der Federhalter und das Ventilsitzelement gegeneinander verlagerbar sind, sodass der Federhalter und das Ventilsitzelement in der Freigabestellung der Fixiervorrichtung einen ersten Abstand voneinander aufweisen und in der Fixierstellung einen von dem ersten Abstand verschiedenen zweiten Abstand. Entweder der Federhalter oder das Ventilsitzelement ist insoweit verlagerbar, nämlich zwischen der Freigabestellung und der Fixierstellung beziehungsweise umgekehrt. Das Verlagern des jeweiligen Elements, also des Federhalters oder des Ventilsitzelements, ist dabei relativ zu dem Ventilgehäuse sowie dem jeweils anderen Element, also dem Ventilsitzelement oder dem Federhalter, vorgesehen.

Entsprechend weisen der Federhalter und das Ventilsitzelement in der Freigabestellung der Fixiervorrichtung einen ersten Abstand voneinander auf und in der Fixierstellung einen zweiten Abstand, wobei die beiden Abstände voneinander verschieden sind. Beispielsweise werden der Federhalter und das Ventilsitzelement bei der Verlagerung der Fixiervorrichtung aus der Freigabestellung in die Fixierstellung voneinander fort verlagert. Die Verwendung entweder des Federhalters oder des Ventilsitzelements als Fixiervorrichtung hat den Vorteil, dass auf ein als Fixiervorrichtung vorliegendes weiteres Element verzichtet werden kann, wenngleich auch eine solche Ausgestaltung vorgesehen sein kann.

In einer bevorzugten weiteren Ausgestaltung der Erfindung ist vorgesehen, dass die Feder derart vorgespannt ist, dass sie bei Vorliegen sowohl des ersten Abstands als auch des zweiten Abstands zwischen dem Ventilsitzelement und dem Federhalter das Ventilelement mit einer Federkraft in den Ventilsitz drängt, die zumindest einer Auslegungsfederkraft der Ventilanordnung entspricht. In Abhängigkeit von der Ausgestaltung der Ventilanordnung kann es selbstverständlich auch vorgesehen sein, dass dies lediglich bei Vorliegen des ersten Abstands oder des zweiten Abstands der Fall ist. Wie bereits vorstehend erläutert, dient die Feder dazu, das Ventilelement in Richtung des Ventilsitzes zu drängen, insbesondere in den Ventilsitz hinein, beispielsweise bei einer Ausgestaltung der Ventilanordnung als Rückschlagventilanordnung. Die Auslegungsfederkraft ist derart gewählt, dass die vollständige Funktionsfähigkeit der Ventilanordnung sichergestellt ist, sobald die Federkraft der Auslegungsfederkraft entspricht oder sie übersteigt.

Im Falle der Rückschlagventilanordnung ist die Auslegungsfederkraft also diejenige Federkraft, welche nach der Montage der Ventilanordnung an der fluidtechnischen Einrichtung das Ventilelement in den Ventilsitz drängen soll, um erst ab Erreichen einer bestimmten Fluidkraft die Strömungsverbindung durch das Ventilgehäuse freizugeben. Beispielsweise weisen das Ventilsitzelement und der Federhalter in der Freigabestellung einen ersten Abstand voneinander auf, der kleiner ist als der zweite Abstand, welchen sie in der Fixierstellung der Fixiervorrichtung voneinander aufweisen. Der tatsächliche Betrieb der Ventilanordnung erfolgt bei Vorliegen der Fixiervorrichtung in der Fixierstellung. Insoweit ist es vorteilhaft, wenn die Feder derart vorgespannt ist, dass bei Vorliegen des ersten Abstands eine Federkraft vorliegt, die die Auslegungsfederkraft übersteigt, während bei Vorliegend des zweiten Abstands die von der Feder bewirkte Federkraft der Auslegungsfederkraft genau entspricht.

Eine Weiterbildung der Erfindung sieht vor, dass das Fixierelement in der Freigabestellung und/oder in der Fixierstellung zumindest bereichsweise, insbesondere in Umfangsrichtung durchgehend, an einer Innenumfangsfläche des Ventilgehäuses anliegt. Durch das Anliegen des Fixierelements an der Innenumfangsfläche des Ventilgehäuses wird auf besonders einfache Art und Weise eine zuverlässige Führung des Fixierelements in axialer Richtung erzielt, also eine Führung derart, dass das Fixierelement zumindest in radialer Richtung festgesetzt ist. Dieses Anliegen kann lediglich in der Freigabestellung oder alternativ in der Fixierstellung vorgesehen sein. Besonders vorteilhaft ist es jedoch, wenn das Fixierelement sowohl in der Freigabestellung als auch in der Fixierstellung an der Innenumfangsfläche des Ventilgehäuses zumindest bereichsweise anliegt. Dies kann zusätzlich in jeder zwischen der Freigabestellung und der Fixierstellung liegenden Stellung des Fixierelements vorgesehen sein.

Eine weitere bevorzugte Ausführungsform der Erfindung sieht vor, dass die Fixiervorrichtung separat von dem Ventilgehäuse ausgebildet und in dieses eingesetzt ist, oder dass die Fixiervorrichtung einstückig und/oder materialeinheitlich mit dem Ventilgehäuse ausgestaltet ist. In der ersten Variante sind die Fixiervorrichtung und das Ventilgehäuse zeitlich und/oder räumlich voneinander hergestellt und anschließend aneinander angeordnet. Insbesondere wird die Fixiervorrichtung dabei in das Ventilgehäuse eingesetzt. Eine derartige Ausgestaltung ist insbesondere vorgesehen, falls der Federhalter oder das Ventilsitzelement als Fixiervorrichtung verwendet werden. Selbstverständlich kann die Fixiervorrichtung jedoch als von dem Federhalter und dem Ventilsitzelement separates, zusätzliches Fixierelement vorliegen.

Alternativ kann es auch vorgesehen sein, dass die Fixiervorrichtung einstückig und/oder materialeinheitlich mit dem Ventilgehäuse ausgestaltet beziehungsweise ausgebildet ist. Das bedeutet, dass die Fixiervorrichtung gemeinsam mit dem Ventilgehäuse hergestellt wird, beispielsweise durch einen gemeinsamen Spritzgießvorgang. Dabei wird die Fixiervorrichtung an das Ventilgehäuse angespritzt, sodass eine einstückige Ausgestaltung vorliegt. Selbstverständlich können die Fixiervorrichtung und das Ventilgehäuse materialeinheitlich ausgestaltet sein. Alternativ sind jedoch auch unterschiedliche Materialien verwendbar. Bei der Herstellung der Fixiervorrichtung und des Ventilgehäuses durch Spritzgießen wird in letzterem Fall beispielsweise ein Mehrkomponentenspritzgießen verwendet.

Die einstückige Ausgestaltung von Fixiervorrichtung und Ventilgehäuse kann entweder lediglich temporär oder permanent vorgesehen sein. In ersterem Fall wird beispielsweise die Verbindung zwischen der Fixiervorrichtung und dem Ventilgehäuse bei dem Verlagern der Fixiervorrichtung in axialer Richtung aus der Freigabestellung in die Fixierstellung unterbrochen, sodass nachfolgend die Fixiervorrichtung von dem Ventilgehäuse separat vorliegt. Soll die Fixiervorrichtung permanent mit dem Ventilgehäuse verbunden sein, also einstückig mit diesem vorliegen, so kann eine flexible Verbindung zwischen der Fixiervorrichtung und dem Ventilgehäuse vorgesehen sein, die auch bei der Verlagerung der Fixiervorrichtung aus der Freigabestellung in die Montagestellung intakt bleibt, sodass die Fixiervorrichtung vorzugsweise sowohl in der Freigabestellung als auch in der Fixierstellung einstückig und/oder materialeinheitlich mit dem Ventilgehäuse vorliegt.

Eine besonders bevorzugte Ausführungsform der Erfindung sieht vor, dass das Ventilelement ein Führungselement und der Federhalter ein Führungsgegenelement aufweist, wobei das Führungselement und das Führungsgegenelement zur Führung des Ventilelements bezüglich des Federhalters, insbesondere in axialer Richtung, miteinander zusammenwirken. Während eines Betriebs der Ventilanordnung nach dessen Montage müssen das Ventilelement und der Federhalter gegeneinander verlagerbar sein, um die Funktionsfähigkeit der Ventilanordnung sicherzustellen. Vorzugsweise ist dabei der Federhalter bezüglich des Ventilgehäuses ortsfest angeordnet beziehungsweise befestigt, während das Ventilelement bezüglich des Ventilgehäuses und des Federhalters verlagerbar ist, insbesondere in axialer Richtung.

Um ein Verkippen des Ventilelements einerseits bezüglich des Federhalters und/oder des Ventilgehäuses andererseits zu verhindern, sind das Führungselement und das Führungsgegenelement vorgesehen. Beispielsweise greift das Führungselement in das Führungsgegenelement ein oder umgekehrt. Insbesondere liegt das Führungselement als Führungshülse vor, welche einen als Führungsgegenelement vorliegenden Führungsvorsprung umgreift, sodass eine Innenumfangsfläche des Führungselements an einer Außenumfangsfläche des Führungsgegenelements anliegt, insbesondere in Umfangsrichtung bezüglich einer Längsmittelachse des Ventilgehäuses durchgehend oder zumindest an mehreren voneinander beabstandeten Anlagestellen.

Vorzugsweise ist es vorgesehen, dass das Führungselement und das Führungsgegenelement in jeder Stellung des Ventilelements bezüglich des Federhalters während eines Betriebs der Ventilanordnung ineinander eingreifen. Insbesondere beträgt die kleinste Strecke, um welche das Führungselement und das Führungsgegenelement während des Betriebs der Ventilanordnung ineinander eingreifen, bezogen auf eine maximale Strecke, bei welcher also das Ventilelement maximal in Richtung des Federhalters verlagert ist, mindestens 25 %, mindestens 30 %, mindestens 35 %, mindestens 40 %, mindestens 45 % oder mindestens 50 %. Ein besonders zuverlässiges und verkantungsfreies Führen des Ventilelements bezüglich des Federhalters wird durch einen runden Querschnitt des Führungselements und des Führungsgegenelements erzielt. Beispielsweise liegt also das Führungselement als Kreishohlzylinder und das Führungsgegenelement als in den Kreishohlzylinder eingreifender Kreiszylinder vor.

Eine bevorzugte Ausgestaltung der Erfindung sieht vor, dass das Ventilsitzelement ortsfest an dem Ventilgehäuse vorliegt und der Federhalter durch Aufbringen einer Montagekraft auf das Ventilelement, insbesondere durch den Ventilsitz hindurch, aus der Freigabestellung in die Fixierstellung verlagerbar ist. Das Ventilsitzelement, in welchem der Ventilsitz vorliegt, ist also ortsfest angeordnet, insbesondere an dem Ventilgehäuse befestigt. Bevorzugt ist das Ventilsitzelement einstückig mit dem Ventilgehäuse ausgebildet. Bei einer derartigen Ausführungsform dient der Federhalter als Fixiervorrichtung und ist insoweit in axialer Richtung verlagerbar, indem die Montagekraft auf den Federhalter aufgebracht wird. Das Aufbringen der Montagekraft ist bevorzugt über das Ventilelement vorgesehen. Insbesondere wird die Montagekraft ausschließlich über das Ventilelement auf den Federhalter übertragen.

Beispielsweise wird also das Ventilelement in Richtung des Federhalters gedrängt, bis das Ventilelement an dem Federhalter anliegt. Beispielsweise tritt dabei das Führungselement mit dem Federhalter und/oder das Führungsgegenelement mit dem Ventilelement in axialer Richtung in Anlagekontakt. Anschließend kann die Montagekraft über das Ventilelement auf den Federhalter übertragen werden, zum Beispiel über das Führungselement und/oder das Führungsgegenelement. Durch das Aufbringen der Montagekraft auf den Federhalter wird dieser aus der Freigabestellung heraus in die Fixierstellung hinein verlagert. Das Aufbringen der Montagekraft erfolgt besonders bevorzugt durch den Ventilsitz hindurch. Zu diesem Zweck durchgreift beispielsweise ein Montagewerkzeug den Ventilsitz und drängt das Ventilelement in Richtung des Federhalters, um auf diesen die Montagekraft aufzubringen.

In einer bevorzugten Ausführungsform der Erfindung kann es vorgesehen sein, die vorstehend beschriebene Montagekraft in Form einer Fluidkraft auf die Fixiervorrichtung, insbesondere den Federhalter, aufzubringen. Hierzu wird die Fixiervorrichtung mit einem entsprechenden Fluiddruck beaufschlagt. Das Beaufschlagen mit dem Fluiddruck ist vorzugsweise innerhalb einer kurzen Zeitspanne vorgesehen, sodass zusammenfassend ein Fluiddruckstoß erzeugt wird, der die Montagekraft auf die Fixiervorrichtung ausübt. Der Fluiddruck beziehungsweise Fluiddruckstoß kann beispielsweise im Rahmen einer Dichtheitsprüfung und/oder Durchflussprüfung der Ventilanordnung und/oder der fluidtechnischen Einrichtung erzeugt werden.

Eine weitere besonders bevorzugte Ausführungsform der Erfindung sieht vor, dass sich das Ventilelement bei Aufbringen der Montagekraft über die Feder und/oder das Führungselement an dem Federhalter abstützt. Hierauf wurde vorstehend bereits zumindest teilweise hingewiesen. Das Übertragen der Montagekraft kann wenigstens teilweise über die Feder erfolgen, welche einerseits an dem Ventilelement und andererseits an dem Federhalter anliegt. Es kann jedoch auch vorgesehen sein, dass das Führungselement derart an dem Federhalter anliegt, dass die gesamte Montagekraft über es übertragen wird. Wie bereits erläutert, kann auch umgekehrt das Führungsgegenelement des Federhalters an dem Ventilelement anliegen, sodass auch über das Führungsgegenelement die Montagekraft übertragbar ist.

Eine weitere Ausgestaltung der Erfindung sieht vor, dass die Hintergriffsrastelemente an in Umfangsrichtung voneinander beabstandeten Rastarmen vorliegen, wobei die Fixiervorrichtung Radialvorsprünge aufweist, die in zwischen den Rastarmen vorliegende Zwischenräume eingreifen. Die Rastarme sind vorzugsweise Bestandteile des Ventilgehäuses. Sie erstrecken sich beispielsweise ausgehend von einem Grundelement des Ventilgehäuses in axialer Richtung. Das Grundelement ist dabei vorzugsweise starr ausgebildet, während die Rastarme elastisch verformbar sind, insbesondere derart, dass die an ihnen vorliegenden Hintergriffsrastelemente in radialer Richtung zwischen der Raststellung und der Montagestellung verlagerbar sind, sofern die Hintergriffsrastelemente (noch) nicht mittels der Fixiervorrichtung in der Raststellung festgesetzt sind.

Die Rastarme sind in Umfangsrichtung bezüglich der Längsmittelachse des Ventilgehäuses voneinander beabstandet angeordnet, insbesondere um ihre elastische Verformbarkeit sicherzustellen. Entsprechend liegen zwischen den Rastarmen Zwischenräume beziehungsweise Freiräume vor, welche in axialer Richtung verlaufen. Besonders bevorzugt sind die Rastarme derart ausgestaltet, dass die Zwischenräume im Querschnitt gesehen im Wesentlichen rechtwinklig, zumindest jedoch mehreckig, insbesondere viereckig, sind. Die Fixiervorrichtung weist nun Radialvorsprünge auf, die in diese Zwischenräume eingreifen. Insbesondere ist jedem Radialvorsprung ein Zwischenraum zugeordnet, sodass also jeder der Radialvorsprünge in genau einen der Zwischenräume eingreift. Umgekehrt kann analog jedem der Zwischenräume genau ein Radialvorsprung der Fixiervorrichtung zugeordnet sein.

Die Radialvorsprünge erstrecken sich in radialer Richtung nach außen und sind bevorzugt an die Zwischenräume form- und/oder abmessungsangepasst. Das bedeutet, dass die Radialvorsprünge beispielsweise in Umfangsrichtung dieselben Abmessungen aufweisen wie die Zwischenräume. Entsprechend liegt jeder der Radialvorsprünge in Umfangsrichtung gesehen beidseitig an Rastarmen an, sodass also auf einer Seite jedes Radialvorsprungs ein Rastarm anliegt, während auf der anderen Seite ein anderer Rastarm anliegt. Mit einer derartigen Ausgestaltung werden die Hintergriffsrastelemente beziehungsweise die Rastarme besonders effektiv in der Raststellung festgesetzt.

Zur Verlagerung aus der Raststellung in die Montagestellung werden die Hintergriffsrastelemente üblicherweise in radialer Richtung nach innen verlagert. Dies würde jedoch bewirken, dass sich der Abstand zwischen den Rastarmen in Umfangsrichtung verringert. Dies wird durch die Radialvorsprünge verhindert, sodass die Hintergriffsrastelemente nicht nur durch ein Anliegen der Fixiervorrichtung an ihnen beziehungsweise den Rastarmen in radialer Richtung festsetzbar sind, sondern zusätzlich oder alternativ durch das Eingreifen der Radialvorsprünge in die Zwischenräume.

Eine Weiterbildung der Erfindung sieht vor, dass die Fixiervorrichtung in der Freigabestellung und/oder der Fixierstellung mittels einer Rasteinrichtung rastend gehalten ist, und/oder dass die Fixiervorrichtung in der Freigabestellung über eine Sollbruchstelle mit dem Ventilgehäuse verbunden ist. Um zu verhindern, dass die Fixiervorrichtung unbeabsichtigt aus der Freigabestellung heraus, insbesondere bis in die Fixierstellung hinein verlagert wird, und/oder um ein unbeabsichtigtes Lösen der Hintergriffsrastelemente durch Verlagerung der Fixiervorrichtung aus der Fixierstellung heraus zu verhindern, ist die Rasteinrichtung vorgesehen. Diese dient dem rastenden Halten der Fixiervorrichtung entweder in der Freigabestellung oder in der Fixierstellung oder in beiden.

Zusätzlich oder alternativ kann es vorgesehen sein, dass die Fixiervorrichtung in der Freigabestellung über die Sollbruchstelle mit dem Ventilgehäuse verbunden ist. Bei einer derartigen Ausführungsform ist ein zuverlässiges Halten der Fixiervorrichtung vor der Montage der Ventilanordnung an der fluidtechnischen Einrichtung sichergestellt. Erst nach dem Einbringen des Ventilgehäuses in die Aufnahmeöffnung wird die Fixiervorrichtung verlagert, insbesondere durch Beaufschlagen mit der Montagekraft. Bei dem Verlagern wird die Verbindung zwischen der Fixiervorrichtung und dem Ventilgehäuse an der Sollbruchstelle unterbrochen, sodass nachfolgend die Fixiervorrichtung frei verlagert werden kann, insbesondere bis hin in die Fixierstellung. In dieser kann sie nachfolgend mithilfe der Rasteinrichtung rastend gehalten sein, obwohl dies selbstverständlich rein optional ist.

Schließlich kann in einer weiteren Ausführungsform der Erfindung vorgesehen sein, dass die Hintergriffsrastelemente jeweils eine Schrägfläche aufweisen, die bei einer Verlagerung der Hintergriffsrastelemente in Richtung der Raststellung die Ventilanordnung in die Aufnahmeöffnung hineindrängt und/oder die Ventilanordnung an eine zwischen der Ventilanordnung und der fluidtechnischen Einrichtung angeordnete Dichtung drängt. Die Schrägfläche ist auf der nach dem Anordnen des Ventilgehäuses in der Aufnahmeöffnung dem Rastgegenelement beziehungsweise dem Rand der Aufnahmeöffnung zugewandten Seite der Hintergriffsrastelemente ausgebildet. Die Schrägfläche ist derart ausgerichtet, dass sie bei einer Verlagerung der Hintergriffsrastelemente aus der Montagestellung in Richtung der Raststellung mit dem Rastgegenelement beziehungsweise dem Rand der Aufnahmeöffnung derart in Wirkverbindung tritt, dass das Ventilgehäuse weiter in die Aufnahmeöffnung hinein bewegt wird, nämlich in Montagerichtung.

Vorstehend wurde bereits darauf hingewiesen, dass auf der den Hintergriffsrastelementen abgewandten Seite der Aufnahmeöffnung ein Gegenlager vorliegen kann. Dieses ist beispielsweise Bestandteil des Ventilgehäuses oder an diesem befestigt. Das Gegenlager kann nun die Dichtung aufweisen beziehungsweise die Dichtung an dem Gegenlager angeordnet sein. Alternativ kann das Gegenlager in Form einer Dichtung ausgebildet sein. Die Schrägflächen der Hintergriffsrastelemente sollen bei der Verlagerung der Hintergriffsrastelemente in Richtung der Raststellung die Ventilanordnung an die Dichtung drängen, wobei die Dichtung andererseits an die fluidtechnische Einrichtung gedrängt werden kann. Beispielsweise ist also die Dichtung zwischen der Ventilanordnung und der fluidtechnischen Einrichtung gehalten, insbesondere klemmend gehalten.

Die Dichtung kann vor der Montage der Ventilanordnung entweder an dieser oder an der fluidtechnischen Einrichtung angeordnet sein. Insbesondere ist die Dichtung in einer Ausnehmung der Ventilanordnung oder der fluidtechnischen Einrichtung gehalten. Mithilfe der Schrägflächen wird die Dichtung beim rastenden Befestigen des Ventilgehäuses an der fluidtechnischen Einrichtung zwischen der Ventilanordnung und der fluidtechnischen Einrichtung verklemmt, sodass die Ventilanordnung dicht an der fluidtechnischen Einrichtung befestigt ist, entsprechend also eine Außenumgebung der Ventilanordnung gegenüber der fluidtechnischen Einrichtung und der Ventilanordnung abgedichtet ist.

Eine weitere Ausgestaltung der Erfindung sieht vor, dass der Federhalter wenigstens einen in die von dem Ventilsitzelement abgewandte Richtung ragenden Montagevorsprung aufweist, der bei Einschieben der Ventilanordnung in die Aufnahmeöffnung mit einem bezüglich der Aufnahmeöffnung ortsfest angeordneten Gegenelement in Anlagekontakt tritt, um den Federhalter aus der Freigabestellung in die Fixierstellung zu verlagern. Vorstehend wurde erläutert, dass die Montagekraft über das Ventilelement auf den Federhalter aufgebracht werden kann. Alternativ kann die hier vorgesehene Ausgestaltung der Ventilanordnung realisiert sein. In dieser liegt der Montagevorsprung vor, welcher mit der Fixiervorrichtung, insbesondere dem Federhalter, verbunden ist. Beispielsweise ist der Montagevorsprung einstückig und/oder materialeinheitlich mit der Fixiervorrichtung beziehungsweise dem Federhalter ausgebildet.

Der Montagevorsprung steht vorzugsweise über die Hintergriffsrastelemente über, insbesondere in Richtung der Aufnahmeöffnung. Der Montagevorsprung ragt also weiter in die Aufnahmeöffnung beziehungsweise die fluidtechnische Einrichtung hinein als die Hintergriffsrastelemente. In der fluidtechnischen Einrichtung ist nun das Gegenelement vorgesehen, insbesondere unmittelbar hinter der Aufnahmeöffnung. Das Gegenelement ist ortsfest in der fluidtechnischen Einrichtung angeordnet. Bei dem Einbringen des Ventilgehäuses in die Aufnahmeöffnung tritt der Montagevorsprung in Anlagekontakt mit dem Gegenelement. Hierdurch wird die Montagekraft auf die Fixiervorrichtung bewirkt, sodass diese in Richtung der Fixierstellung, insbesondere bis in diese hinein, gedrängt wird. Bei einer derartigen Ausgestaltung ist es also lediglich notwendig, das Ventilgehäuse durch die Aufnahmeöffnung hinein in die fluidtechnische Einrichtung einzubringen. Während des Einbringens werden die Hintergriffsrastelemente von der Fixiervorrichtung festgesetzt, sodass die Ventilanordnung nach ihrem Anordnen in der Montageposition sicher an der fluidtechnischen Einrichtung gehalten ist, ohne dass weitere Schritte vorzunehmen wären.

Eine weitere bevorzugte Ausführungsform der Erfindung sieht vor, dass ein Betätigungsmittel an der Fixiervorrichtung befestigt ist, das aus dem Ventilgehäuse herausragt, insbesondere durch den Ventilsitz hindurch, und mittels welchem die Fixiervorrichtung aus der Freigabestellung in die Fixierstellung verlagerbar ist. Das Betätigungsmittel dient dem Aufbringen der Montagekraft auf die Fixiervorrichtung, insbesondere nach dem Anordnen der Ventilanordnung in der Aufnahmeöffnung. Hat also die Ventilanordnung beziehungsweise das Ventilgehäuse die Montageposition erreicht, wird das Betätigungsmittel betätigt und über dieses, insbesondere ausschließlich über dieses, die Montagekraft auf die Fixiervorrichtung ausgeübt. Das Betätigungsmittel kann dabei aus dem Ventilgehäuse herausragen, damit es von einem die Montage durchführenden Benutzer ohne weiteres mit der Montagekraft beaufschlagt werden kann. Beispielsweise ragt es dabei durch den Ventilsitz hindurch, also vollständig aus dem Ventilgehäuse beziehungsweise der Ventilanordnung heraus.

Beispielsweise ist das Betätigungsmittel, zumindest vor der Montage der Ventilanordnung an der fluidtechnischen Einrichtung klemmend zwischen dem Ventilsitz und dem Ventilelement gehalten, sodass eine unbeabsichtigte Betätigung des Betätigungsmittels unterbunden ist. Das Betätigungsmittel ist vorzugsweise flexibel, beispielsweise liegt es in Form einer Schnur oder dergleichen vor. Beispielsweise ist das Betätigungsmittel auf zwei gegenüberliegenden Enden an der Fixiervorrichtung befestigt. Selbstverständlich kann das Betätigungsmittel jedoch auch nur an einer Stelle an der Fixiervorrichtung befestigt sein. Die Befestigung des Betätigungsmittels an der Fixiervorrichtung ist vorzugsweise derart ausgebildet, dass über das Betätigungsmittel die Montagekraft ohne weiteres auf der Fixiervorrichtung aufgebracht werden kann. Nachdem die Fixiervorrichtung in ihre Fixierstellung verbracht wurde, kann nun eine Kraft auf das Betätigungsmittel ausgeübt werden, welche die Montagekraft übersteigt. Hierdurch kann das Betätigungsmittel von der Fixiervorrichtung entfernt werden. Beispielsweise weist das Betätigungsmittel eine Sollbruchstelle auf oder die Befestigung des Betätigungsmittels an der Fixiervorrichtung ist derart ausgestaltet, dass sich das Betätigungsmittel bei Aufbringen der größeren Kraft von der Fixiervorrichtung löst.

In einer weiteren Ausgestaltung der Erfindung kann vorgesehen sein, dass die Fixiervorrichtung mehrere, in Umfangsrichtung voneinander beabstandete Fixierelemente aufweist. Die Fixiervorrichtung kann, muss jedoch in Umfangsrichtung nicht durchgehend sein. Beispielsweise weist sie die Fixierelemente auf, welche in Umfangsrichtung voneinander beabstandet sind. Die Fixierelemente können über Zwischenelemente miteinander verbunden sein, insbesondere ist zwischen jeweils zwei Fixierelementen ein Zwischenelement angeordnet. Die Fixierelemente können jedoch auch vollständig unabhängig voneinander vorliegen und die Fixiervorrichtung ausbilden. Insoweit sind die Fixierelemente unabhängig voneinander verlagerbar beziehungsweise betätigbar. Die Fixierelemente sind vorzugsweise derart angeordnet, dass ihre Außenumfangsfläche nach der Verlagerung in die Fixierstellung in radialer Richtung an den Hintergriffsrastelementen und/oder den Rastarmen anliegt und diese abstützt. Beispielsweise ist jedem Hintergriffsrastelement ein derartiges Fixierelement zugeordnet. Jedes der Fixierelemente kann jedoch auch an mehreren Hintergriffsrastelementen anliegen und diese in radialer Richtung abstützen, sofern das jeweilige Fixierelement in der Fixierstellung vorliegt.

Schließlich kann in einer weiteren bevorzugten Ausführungsform der Erfindung vorgesehen sein, dass der Fixiervorrichtung wenigstens eine an dem Ventilgehäuse angeordnete Führungseinrichtung zugeordnet ist, die die Fixiervorrichtung in radialer Richtung festsetzt. Die Führungseinrichtung dient dem Führen der Fixiervorrichtung vorzugsweise in axialer Richtung. Beispielsweise weist die Führungseinrichtung einen Führungsschlitz beziehungsweise eine Führungsnut auf, in welchem/welcher die Fixiervorrichtung oder zumindest eines der Fixierelemente angeordnet ist, um eine zuverlässige Führung der Fixiervorrichtung beziehungsweise des Fixierelements in axialer Richtung zu erzielen. Die Führungseinrichtung kann dabei die Steifigkeit der Fixiervorrichtung erhöhen, sodass die Fixiervorrichtung den Hintergriffsrastelementen in radialer Richtung eine höhere Gegenkraft entgegensetzen kann, um diese in der Raststellung festzusetzen. Mithilfe der Führungseinrichtung kann also die Festigkeit der Verbindung zwischen der Ventilanordnung und der fluidtechnischen Einrichtung weiter erhöht werden.

Die Erfindung betrifft selbstverständlich auch eine fluidtechnische Einrichtung, die eine Aufnahmeöffnung aufweist, in welcher eine Ventilanordnung rastend befestigbar beziehungsweise rastend befestigt ist. Die Ventilanordnung weist dabei ein Ventilgehäuse auf, in dem ein von einer Feder federkraftbeaufschlagtes Ventilelement bezüglich eines einen Ventilsitz aufweisenden Ventilsitzelements verlagerbar angeordnet ist, das in einer Geschlossenstellung mit dem Ventilsitz zum Unterbrechen einer Strömungsverbindung durch das Ventilgehäuse zusammenwirkt und die Strömungsverbindung in einer Offenstellung freigibt, wobei sich die Feder an einem in dem Ventilgehäuse angeordneten Federhalter abstützt. Dabei ist vorgesehen, dass das Ventilgehäuse Hintergriffsrastelemente aufweist, mittels welchen die Ventilanordnung in einer Aufnahmeöffnung einer fluidtechnischen Einrichtung rastend befestigbar ist, wobei die Hintergriffsrastelemente in radialer Richtung bezüglich einer Längsmittelachse des Ventilgehäuses zwischen einer Raststellung, in der sie ein der Aufnahmeöffnung zugeordnetes Rastgegenelement hintergreifen, und einer Montagestellung, in der sie außer Eingriff mit dem Rastgegenelement stehen, elastisch verlagerbar sind, wobei die Hintergriffsrastelemente mittels einer Fixiervorrichtung in der Raststellung festsetzbar sind.

Auf die Vorteile einer derartigen Ausgestaltung der Ventilanordnung beziehungsweise der fluidtechnischen Einrichtung wurde bereits hingewiesen. Sowohl die Ventilanordnung als auch die fluidtechnische Einrichtung können gemäß den vorstehenden Ausführungen weiterbildet sein, sodass insoweit auf diese verwiesen wird.

Weiterhin betrifft die Erfindung ein Verfahren zum Montieren einer Ventilanordnung, insbesondere einer Ventilanordnung gemäß den vorstehenden Ausführungen, an einer fluidtechnischen Einrichtung. Hierbei ist es vorzugsweise zunächst vorgesehen, die Ventilanordnung in der Aufnahmeöffnung der fluidtechnischen Einrichtung anzuordnen und dort mittels der Hintergriffsrastelemente zu verrasten. Anschließend wird die Fixiervorrichtung in die Fixierstellung gebracht, um die Hintergriffselemente in ihrer Raststellung festzusetzen. Erneut wird auf die weiteren Ausführungen im Rahmen der vorliegenden Beschreibung verwiesen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Längsschnittdarstellung durch einen Bereich einer fluidtechnischen Einrichtung sowie einer Ventilanordnung in einem ersten Montageschritt,
- Figur 2: die fluidtechnische Einrichtung sowie die Ventilanordnung in einem zweiten Montageschritt,
- Figur 3: die fluidtechnische Einrichtung sowie die Ventilanordnung nach der Montage,
- Figur 4: eine Detaildarstellung eines Bereichs der fluidtechnischen Einrichtung sowie der Ventilanordnung in dem ersten Montageschritt,
- Figur 5: eine Detaildarstellung nach der Montage,
- Figur 6: die fluidtechnische Einrichtung mit einer zweiten Ausführungsform der Ventilanordnung in dem ersten Montageschritt,
- Figur 7: die fluidtechnische Einrichtung sowie die Ventilanordnung in der zweiten Ausführungsform nach der Montage,
- Figur 8: die fluidtechnische Einrichtung sowie die Ventilanordnung in einer dritten Ausführungsform in einem ersten Montageschritt,
- Figur 9: die fluidtechnische Anordnung sowie die Ventilanordnung in der dritten Ausführungsform in einem zweiten Montageschritt,
- Figur 10: die fluidtechnische Einrichtung sowie die Ventilanordnung in der dritten Ausführungsform nach der Montage,
- Figur 11: eine erste Anordnungsvariante einer Dichtung,
- Figur 12: eine zweite Anordnungsvariante der Dichtung,
- Figur 13: eine dritte Anordnungsvariante der Dichtung,
- Figur 14: eine vierte Anordnungsvariante der Dichtung,
- Figur 15: eine Längsschnittdarstellung durch einen Bereich der fluidtechnischen Einrichtung sowie der Ventilanordnung in einer ersten Ausgestaltungsvariante,
- Figur 16: die fluidtechnische Einrichtung und die Ventilanordnung in der ersten Ausgestaltungsvariante in einer Querschnittsdarstellung,
- Figur 17: eine Längsschnittdarstellung der fluidtechnischen Einrichtung sowie der Ventilanordnung in einer zweiten Ausgestaltungsvariante, sowie
- Figur 18: eine Querschnittsdarstellung der fluidtechnischen Einrichtung sowie der Ventilanordnung in der zweiten Ausgestaltungsvariante.

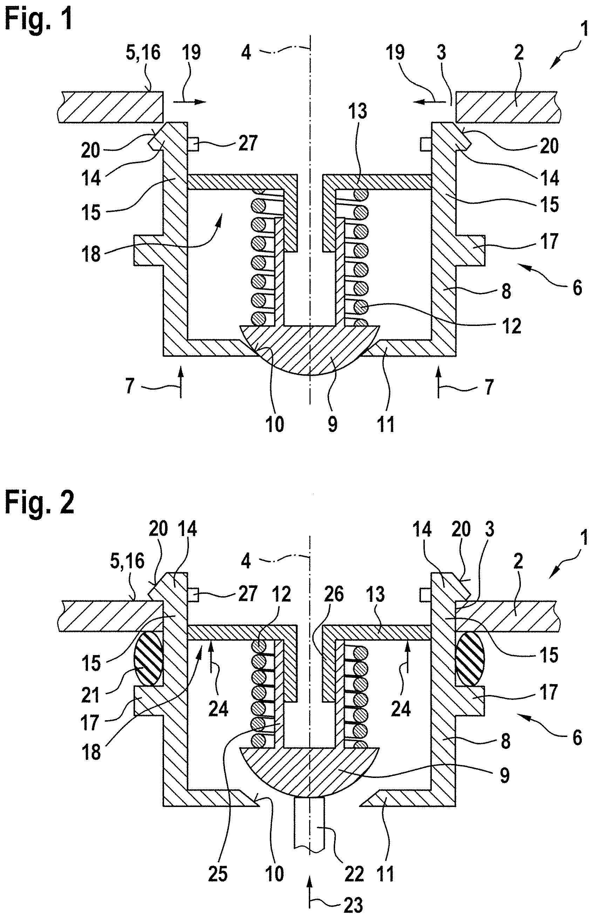

Die Figur 1 zeigt eine Längsschnittdarstellung durch einen Bereich einer fluidtechnischen Einrichtung 1, von welcher lediglich eine Wand 2 mit einer Aufnahmeöffnung 3 dargestellt ist.

Die Aufnahmeöffnung 3 ist in Umfangsrichtung bezüglich einer Längsmittelache 4 der Aufnahmeöffnung 3 durchgehend von einem Rand 5 begrenzt. Entsprechend ist die Aufnahmeöffnung 3 randgeschlossen in der Wand 2 ausgebildet. Die Aufnahmeöffnung 3 kann beispielsweise im Querschnitt rund sein. Auch andere Querschnittsformen, beispielsweise mehreckig, insbesondere viereckig oder rechteckig, sind jedoch realisierbar.

An der fluidtechnischen Einrichtung soll eine Ventilanordnung 6 befestigt werden. Hierzu wird die Ventilanordnung 6 in Richtung der Pfeile 7, welche eine Montagerichtung andeuten, in die Aufnahmeöffnung 3 eingebracht. Die Ventilanordnung 6 weist ein Ventilgehäuse 8 auf, in welchem ein Ventilelement 9 bezüglich eines Ventilsitzes 10 verlagerbar angeordnet ist, insbesondere in axialer Richtung bezüglich einer Längsmittelachse der Ventilanordnung 6 beziehungsweise des Ventilgehäuses 8, welche in der hier dargestellten Anordnung der fluidtechnischen Einrichtung 1 und der Ventilanordnung 6 zueinander mit der Längsmittelachse 4 zusammenfällt.

Der Ventilsitz 10 ist in einem Ventilsitzelement 11 ausgebildet. Das Ventilelement 9 ist zumindest nach der Montage der Ventilanordnung 6 an der fluidtechnischen Einrichtung 1 bezüglich des Ventilsitzes 10 beziehungsweise des Ventilsitzelements 11 verlagerbar. Liegt das Ventilelement 9 bezüglich des Ventilsitzes 10 in einer Geschlossenstellung vor, so wirkt es mit dem Ventilsitz 10 zum Unterbrechen einer Strömungsverbindung durch das Ventilgehäuse 8 zusammen. In einer Offenstellung dagegen ist die Strömungsverbindung durch den Ventilsitz 10 und mithin durch das Ventilgehäuse 8 freigegeben. In dem hier dargestellten Ausführungsbeispiel ist das Ventilsitzelement 11 einstückig und/oder materialeinheitlich mit dem Ventilgehäuse 8 ausgeführt.

Das Ventilelement 9 ist von einer Feder 12 federkraftbeaufschlagt, wobei die Federkraft das Ventilelement 9 in Richtung des Ventilsitzes 10 beziehungsweise in diesen hineindrängt. Auf ihrer dem Ventilelement 9 abgewandten Seite stützt sich die Feder 12 an einem Federhalter 13 ab. Einerseits liegt die Feder 12 also an dem Federhalter 13 und andererseits an dem Ventilelement 9 an. Die Feder 12 ist vorzugsweise als Druckfeder ausgebildet, drängt also das Ventilelement 9 von dem Federhalter 13 fort.

Um die Ventilanordnung 6 an der fluidtechnischen Einrichtung 1, insbesondere in der Aufnahmeöffnung 3, zu befestigen, weist das Ventilgehäuse 8 Hintergriffsrastelemente 14 auf. Vorzugsweise ist eine Vielzahl von Hintergriffsrastelementen 14 vorgesehen, welche in Umfangsrichtung bezüglich der Längsmittelachse 4 beabstandet voneinander angeordnet sind. Die Hintergriffsrastelemente 14 liegen vorzugsweise an Rastarmen 15 vor, welche elastisch verformbar sind, sodass die Hintergriffsrastelemente 14 in radialer Richtung auslenkbar sind. Insbesondere können die Hintergriffsrastelemente 14 in radialer Richtung zwischen einer Raststellung und einer Montagestellung verlagert werden. Die Raststellung kann dabei mit einer Ausgangsstellung der Hintergriffsrastelemente 14 übereinstimmen, in welcher die Hintergriffsrastelemente 14 beziehungsweise die Rastarme 15 entspannt sind, also ohne äußere Krafteinwirkung vorliegen. Unterscheidet sich die Raststellung von der Ausgangsstellung, so liegt sie vorzugsweise näher an der Ausgangsstellung als die Montagestellung. Um aus der Ausgangsstellung in die Montagestellung zu gelangen, müssen die Hintergriffsrastelemente 14 also weiter ausgelenkt werden, als bei einer Verlagerung von der Ausgangsstellung in die Raststellung.

In der Raststellung hintergreifen die Hintergriffsrastelemente 14 ein der Aufnahmeöffnung 3 zugeordnetes Rastgegenelement 16, welches in dem hier dargestellten Ausführungsbeispiel dem Rand 5 der Aufnahmeöffnung 3 entspricht. In der Montagestellung sind die Hintergriffsrastelemente 14 dagegen in radialer Richtung derart verlagert, dass sie außer Eingriff mit dem Rastgegenelement 16 stehen, also einer Verlagerung der Ventilanordnung 6 in axialer Richtung, insbesondere entgegen der von den Pfeilen 7 angedeuteten Montagerichtung, nicht entgegenwirkt. Die Hintergriffsrastelemente 14 dienen wie die Rastarme 15 einer rastenden Befestigung der Ventilanordnung 6 an der fluidtechnischen Einrichtung 1.

Die Ventilanordnung 6 kann in axialer Richtung beabstandet von den Hintergriffsrastelementen 14 ein Gegenlager 17 aufweisen, welches in der hier dargestellten Ausführungsform als Radialvorsprung vorliegt. Der Radialvorsprung ist bevorzugt einstückig und/oder materialeinheitlich mit dem Ventilgehäuse 8 ausgebildet. Er weist Außenabmessungen auf, welche größer sind als die Innenabmessungen der Aufnahmeöffnung 3, sodass also die Ventilanordnung 6 nicht vollständig durch die Aufnahmeöffnung 3 hindurch verlagert werden kann, sondern lediglich bis zu einem Inkontakttreten des Gegenlagers 17 mit der Wand 2.

Die Ventilanordnung 6 weist weiterhin eine Fixiervorrichtung 18 auf, mittels welcher die Hintergriffsrastelemente 14 in der Raststellung festsetzbar sind. Die Fixiervorrichtung 18 wird in dem hier dargestellten Ausführungsbeispiel von dem Federhalter 13 gebildet. Die Fixiervorrichtung 18, hier also der Federhalter 13, ist in axialer Richtung zwischen einer hier gezeigten Freigabestellung, in der eine radiale Verlagerung der Hintergriffsrastelemente 14 in die Montagestellung zugelassen ist, und einer Fixierstellung, in der die Hintergriffsrastelemente 14 in radialer Richtung festgesetzt sind, verlagerbar. Hierbei sind der Federhalter 13 und das Ventilsitzelement 11 gegeneinander verlagerbar, sodass der Federhalter 13 und das Ventilsitzelement 11 in der Freigabestellung der Fixiervorrichtung 18 voneinander einen ersten Abstand aufweisen und in der Fixierstellung einen von dem ersten Abstand verschiedenen zweiten Abstand. Für das hier gezeigte Ausführungsbeispiel ist der zweite Abstand größer als der erste Abstand.

Gezeigt ist ein erster Montageschritt der Ventilanordnung 6. In diesem wird die Ventilanordnung 6 in Richtung der Pfeile 7, also in Montagerichtung, in Richtung der Aufnahmeöffnung 3 beziehungsweise in diese hinein verlagert. Dabei werden die Hintergriffsrastelemente 14 in radialer Richtung nach innen in ihre Montagestellung ausgelenkt, wie durch die Pfeile 19 angedeutet. Die Auslenkung der Hintergriffsrastelemente 14 wird beispielsweise durch Schrägflächen 20 bewirkt, welche an den Hintergriffsrastelementen 14 ausgebildet sind. Die Schrägflächen 20 treten bei dem Verlagern der Ventilanordnung 6 in die Aufnahmeöffnung 3 hinein in Berührkontakt mit der Wand 2 und drängen entsprechend die Hintergriffsrastelemente 14 in radialer Richtung nach innen in die Montagestellung.

Die Figur 2 zeigt die fluidtechnische Einrichtung 1 sowie die Ventilanordnung 6 in einem zweiten Montageschritt. In diesem ist die Ventilanordnung 6 so weit in der Aufnahmeöffnung 3 angeordnet, dass die Hintergriffsrastelemente 14 elastisch wieder in Richtung ihrer Ausgangsstellung verlagert werden, insbesondere bis in die Raststellung hinein. Entsprechend hintergreifen die Hintergriffsrastelemente 14 das Rastgegenelement 16 beziehungsweise den Rand 5 der Aufnahmeöffnung 3, sodass die Ventilanordnung 6 nicht mehr entgegen der Montagerichtung aus der Aufnahmeöffnung 3 entnommen werden kann.

Vorzugsweise verhindert das Gegenlager 17 in dieser Position der Ventilanordnung 6, welche auch als Montageposition bezeichnet werden kann, dass die Ventilanordnung 6 in Montagerichtung weiter durch die Aufnahmeöffnung 3 hindurch verlagert werden kann. Beispielsweise weist hierzu das Gegenlager 17 einen entsprechenden Abstand von den Hintergriffsrastelementen 14 auf. Alternativ kann jedoch eine hier lediglich angedeutete Dichtung 21 zwischen dem Gegenlager 17 und der Wand 2 der fluidtechnischen Einrichtung 1 vorliegen, insbesondere dort klemmend gehalten sein.

Nach dem Anordnen der Ventilanordnung 6 in der Montageposition ist es vorgesehen, die Fixiervorrichtung 18 in radialer Richtung zu verlagern, beispielsweise mithilfe eines Montagewerkzeugs 22, welches in Richtung des Pfeils 23 durch den Ventilsitz 10 hindurch mit dem Ventilelement 9 in Anlagekontakt gebracht wird. Es ist also vorgesehen, durch den Ventilsitz 10 hindurch eine Montagekraft auf das Ventilelement 9 aufzubringen, welche über das Ventilelement 9 auf die Fixiervorrichtung 18 übertragen wird, sodass diese sich in Richtung der Pfeile 24 bewegt. Beispielsweise wird die Montagekraft dabei von dem Ventilelement 9 über die Feder 12 auf die Fixiervorrichtung 18 übertragen, zumindest teilweise.

Bevorzugt ist es jedoch vorgesehen, dass das Ventilelement 9 ein Führungselement 25 und der Federhalter 13 beziehungsweise die Fixiervorrichtung 18 ein Führungsgegenelement 26 aufweist. Beispielsweise ist das Führungselement 25 als Hohlzylinder ausgeführt, welcher das ebenfalls zylindrische Führungsgegenelement 26 umgreift und vorzugsweise in jeder Stellung des Ventilelements 9 bezüglich des Ventilsitzes 10 über eine gewisse Distanz in axialer Richtung in Umfangsrichtung durchgehend oder zumindest abschnittsweise an diesem anliegt. Beispielsweise liegt zum Übertragen der Montagekraft von dem Ventilelement 9 auf die Fixiervorrichtung 18 entweder das Führungselement 25 an der Fixiervorrichtung 18 oder umgekehrt das Führungsgegenelement 26 an dem Ventilelement 9 an, jeweils in axialer Richtung. Dies ist hier lediglich angedeutet.

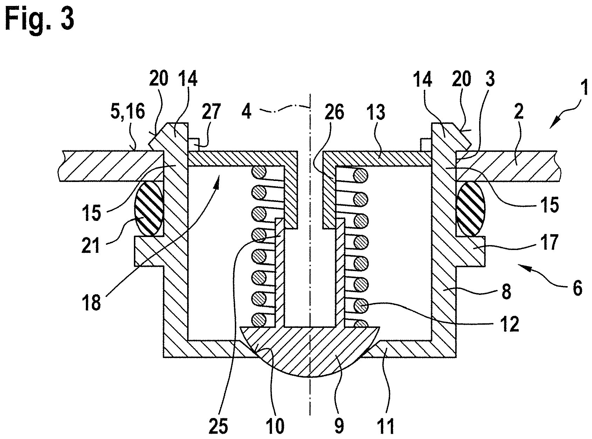

Die Figur 3 zeigt die fluidtechnische Einrichtung sowie die Ventilanordnung 6 nach Abschluss der Montage der Ventilanordnung 6 an der fluidtechnischen Einrichtung 1. Nach der Montage liegt die Fixiervorrichtung 18 in der Fixierstellung vor, in welcher sie beispielsweise an einem Endanschlag 27, vorzugsweise gebildet von wenigstens einem Radialvorsprung, anliegt. Es wird deutlich, dass in der Fixierstellung die Fixiervorrichtung 18 eine Verlagerung der Hintergriffsrastelemente 14 in radialer Richtung verhindert, weil sie an derselben oder zumindest nahezu derselben Axialposition vorliegt. Anders ausgedrückt liegen also die Fixiervorrichtung 18 und die Hintergriffsrastelemente 14 in der Fixierstellung der Fixiervorrichtung 18 in axialer Richtung in Überdeckung vor. Insbesondere liegt die Fixiervorrichtung 18 in radialer Richtung gesehen an den Hintergriffsrastelementen 14 an, insbesondere in Umfangsrichtung durchgehend, sodass die Hintergriffsrastelemente 14 von der Fixiervorrichtung 18 an einer Verlagerung in radialer Richtung nach innen gehindert werden.

Es wird deutlich, dass nach der Montage der Ventilanordnung 6 das Ventilelement 9 von der Feder 12 an den Ventilsitz 10 gedrängt wird. Dies soll mit einer Federkraft erfolgen, welcher einer Auslegungsfederkraft der Ventilanordnung 6 entspricht. Hierzu ist es selbstverständlich notwendig, die Feder 12 vorzuspannen. Weil sich jedoch der Abstand zwischen dem Ventilelement 9 und dem Federhalter 13 verändert, nämlich ausgehend von dem ersten Abstand bis hin zu dem zweiten Abstand, ist es notwendig, dass die Feder bei Vorliegen des ersten Abstands derart vorgespannt ist, dass sie nach dem Verlagern der Fixiervorrichtung 18 in die Fixierstellung, in welcher der zweite Abstand vorliegt, genau die der Auslegungsfederkraft entsprechende Federkraft auf das Ventilelement 9 ausübt.

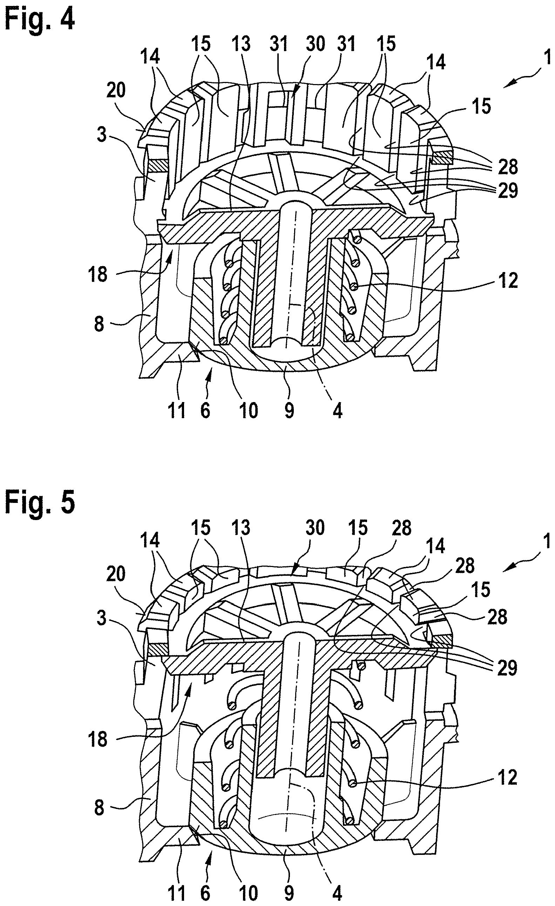

Die Figur 4 zeigt eine Schnittdarstellung durch die fluidtechnische Einrichtung 1 und die Ventilanordnung 6, wobei die Fixiervorrichtung 18 in ihrer Freigabestellung vorliegt. Es ist erkennbar, dass eine Vielzahl von Hintergriffsrastelementen 14 an einer Vielzahl von Rastarmen 15 vorliegt, von welchen lediglich einige beispielhaft gekennzeichnet sind. Die Hintergriffsrastelemente 14 und auch die Rastarme 15 sind in Umfangsrichtung bezüglich der Längsmittelachse 4 voneinander beabstandet, sodass zwischen in Umfangsrichtung unmittelbar benachbart angeordneten Rastarmen 15 jeweils ein Zwischenraum 28 vorliegt. Von den Zwischenräumen 28 ist wiederum lediglich ein Teil beispielhaft gekennzeichnet.

Die Fixiervorrichtung 18 weist nun Radialvorsprünge 29 auf, die in diese Zwischenräume 28 eingreifen. Insbesondere greift jeweils ein Radialvorsprung 29 in jeweils einen Zwischenraum 28 ein. Die Radialvorsprünge 29 sind dabei derart ausgestaltet beziehungsweise bemessen, dass in Umfangsrichtung gesehen einerseits ein erster der Rastarme 15 an ihnen anliegt und auf der in Umfangsrichtung gegenüberliegenden Seite ein zweiter der Rastarme 15. Durch das Eingreifen der Radialvorsprünge 29 in die Zwischenräume 28 ist insoweit zum einen die Fixiervorrichtung 18 in Umfangsrichtung bezüglich des Ventilgehäuses 8 festgelegt. Zum anderen wird die Haltewirkung der Fixiervorrichtung 18 in der Fixierstellung weiter verbessert, weil für ein radiales Auslenken der Hintergriffsrastelemente 14 eine Verkleinerung der Zwischenräume 28 in Umfangsrichtung notwendig ist, welche jedoch durch die Radialvorsprünge 29 unterbunden wird.

Weiterhin ist bei der hier dargestellten Ausführungsform der Ventilanordnung 6 eine Rasteinrichtung 30 vorgesehen, mittels welcher die Fixiervorrichtung 18 entweder in der Freigabestellung, der Fixierstellung oder beiden rastend gehalten wird. Ist das rastende Halten in der Freigabestellung vorgesehen, so wird ein unbeabsichtigtes Verlagern der Fixiervorrichtung 18 in die Raststellung verhindert. Setzt die Rasteinrichtung 30 die Fixiervorrichtung 18 in der Fixierstellung fest, so wird das unbeabsichtigte Lösen der Ventilanordnung 6 von der fluidtechnischen Einrichtung 1 unterbunden. Besonders bevorzugt ist selbstverständlich eine Kombination aus beiden Ausgestaltungen. Insbesondere ist es dabei bevorzugt vorgesehen, dass die Rasteinrichtung 30 zwar eine Verlagerung der Fixiervorrichtung 18 aus der Freigabestellung heraus, insbesondere bis hin in die Fixierstellung, bei Vorliegen beziehungsweise Überschreiten einer bestimmten Montagekraft zulässt. Eine Verlagerung der Fixiervorrichtung 18 aus der einmal erreichten Fixierstellung wird jedoch zuverlässig unterbunden, auch bei Auftreten der Montagekraft, auch wenn diese in Richtung der Freigabestellung gerichtet ist.

Beispielsweise setzt hierzu die Rasteinrichtung 30 die Fixiervorrichtung 18 in der Fixierstellung formschlüssig fest. Die Rasteinrichtung 30 weist beispielsweise wenigstens einen Rastvorsprung 31 auf. In dem hier dargestellten Ausführungsbeispiel sind zwei Rastvorsprünge 31 vorgesehen. Der Rastvorsprung 31 wirkt bevorzugt mit einem hier nicht dargestellten Gegenelement der Fixiervorrichtung 18 zusammen. Zusätzlich oder alternativ kann es vorgesehen sein, dass die Fixiervorrichtung 18 in ihrer Freigabestellung über eine Sollbruchstelle mit dem Ventilgehäuse 8 verbunden ist. Bei Aufbringen zumindest der Montagekraft auf die Fixiervorrichtung 18 löst sich die Verbindung zwischen der Fixiervorrichtung 18 und dem Ventilgehäuse 8 an der Sollbruchstelle. Insbesondere bricht die Verbindung an der Sollbruchstelle.

Die Figur 5 zeigt die fluidtechnische Einrichtung 1 sowie die Ventilanordnung 6, wobei die Fixiervorrichtung 18 in der Fixierstellung vorliegt. Grundsätzlich wird auf die vorstehenden Ausführungen verwiesen.

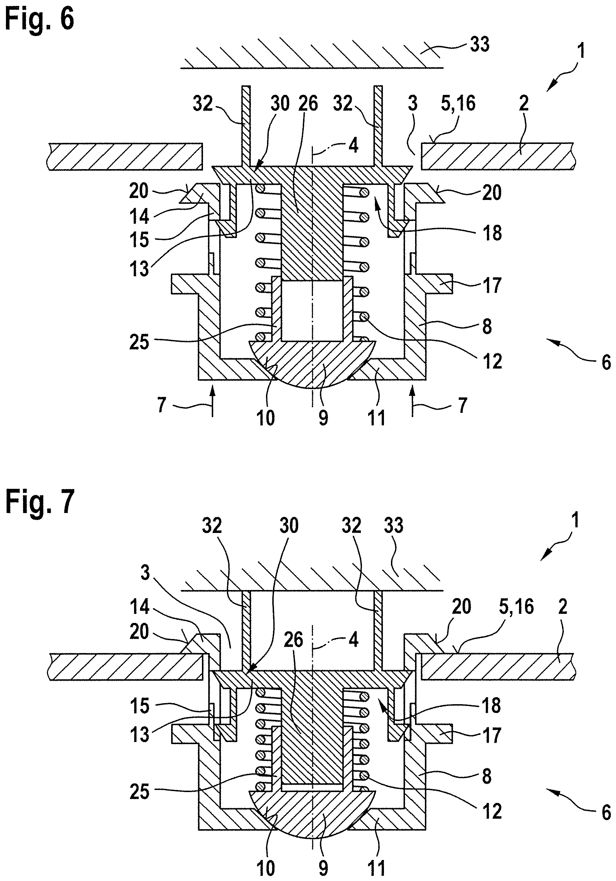

Die Figur 6 zeigt eine Längsschnittdarstellung der fluidtechnischen Einrichtung 1 und der Ventilanordnung 6, wobei letztere in einer zweiten Ausführungsform vorliegt. Die zweite Ausführungsform ähnelt grundsätzlich der vorstehend beschriebenen ersten Ausführungsform, sodass auf die entsprechenden Ausführungen verwiesen und nachfolgend im Wesentlichen auf die Unterschiede eingegangen wird. Weiterhin dient der Federhalter 13 als Fixiervorrichtung 18. Allerdings ist im Rahmen der zweiten Ausführungsform der vorstehend erwähnte zweite Abstand der Fixiervorrichtung 18 von dem Ventilsitzelement 11 kleiner als der erste Abstand. Das bedeutet, dass die Fixiervorrichtung 18 bei einer Verlagerung aus der Freigabestellung in die Fixierstellung auf das Ventilsitzelement 11 zu verlagert wird.

Zur Verlagerung der Fixiervorrichtung 18 ist den Hintergriffsrastelementen 14 wenigstens ein Montagevorsprung 32 zugeordnet. Vorzugsweise liegt eine Vielzahl von Montagevorsprüngen 32 vor. Der Aufnahmeöffnung 3 dagegen ist ein Gegenelement 33 zugeordnet, welches ortsfest in der fluidtechnischen Einrichtung 1 oder an dieser angeordnet ist. Das Einbringen der Ventilanordnung 6 in die Aufnahmeöffnung 3 ist wiederum in Richtung der Pfeile 7 vorgesehen, wobei die Hintergriffsrastelemente 14 die Wand 2 beziehungsweise das Hintergriffsrastelement 14 hintergreifen. Dargestellt ist ein erster Montageschritt, während welchem die Ventilanordnung 6 in die Aufnahmeöffnung 3 eingebracht wird.

Die Figur 7 zeigt die fluidtechnische Einrichtung 1 sowie die Ventilanordnung 6 nach der Montage. Während der Montage gerät der Montagevorsprung 32 in Anlagekontakt mit dem Gegenelement 33. Hierdurch wird bei dem Einbringen der Ventilanordnung 6 in die Aufnahmeöffnung 3 die Fixiervorrichtung 18 bezüglich des Gegenelements 33 festgesetzt und bei einem weiteren Einbringen der Ventilanordnung 6 auf das Ventilsitzelement 11 zu verlagert. Die Abmessungen des Montagevorsprungs 32 beziehungsweise der Abstand des Gegenelements 33 von der Aufnahmeöffnung 3 in axialer Richtung sind derart bemessen, dass die Fixiervorrichtung 18 die Fixierstellung erreicht, sobald die Ventilanordnung 6 in ihrer Montageposition vorliegt.

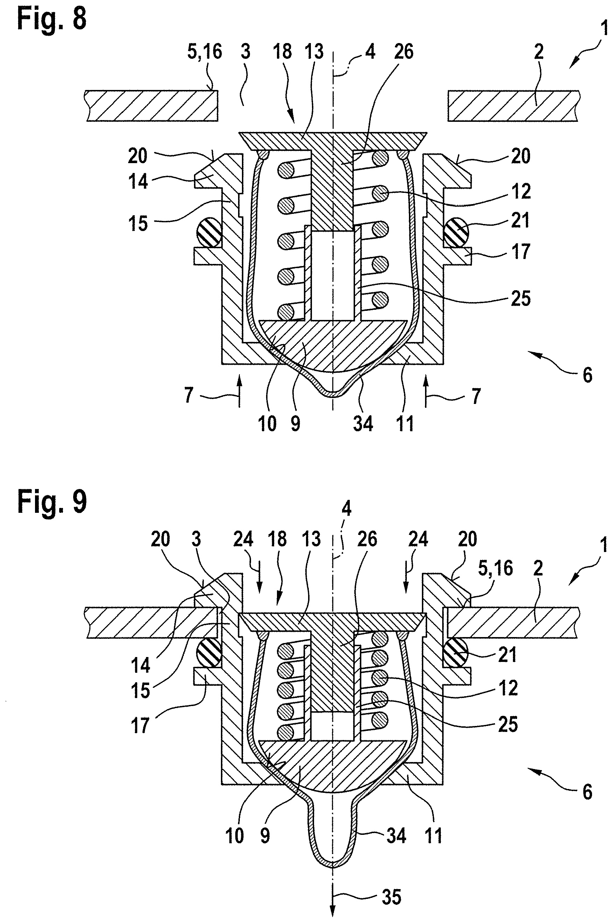

Die Figur 8 zeigt die fluidtechnische Einrichtung 1 sowie die Ventilanordnung 6, wobei die Ventilanordnung 6 in einer dritten Ausführungsform vorliegt. Wiederum wird grundsätzlich auf die vorstehenden Ausführungen, insbesondere hinsichtlich der zweiten Ausführungsform, verwiesen. Im Unterschied zu dieser ist kein Montagevorsprung 32 vorgesehen. Vielmehr ist zur Betätigung beziehungsweise Verlagerung der Fixiervorrichtung 18 ein Betätigungsmittel 34 vorgesehen, welches beispielsweise durch den Ventilsitz 10 hindurch aus der Ventilanordnung 6 herausgeführt ist. Besonders bevorzugt ist das Betätigungsmittel 34 vor der Montage der Ventilanordnung 6 zwischen dem Ventilsitz 10 und dem Ventilelement 9 klemmend gehalten. Analog zu den vorstehenden Ausführungen wird nun die Ventilanordnung 6 in dem ersten Montageschritt in die Aufnahmeöffnung 3 eingebracht, wobei dies erfolgt, bis die Hintergriffsrastelemente 14 den Rand 5 beziehungsweise das Rastgegenelement 16 hintergreifen.

Nachfolgend wird, wie in der Figur 9 dargestellt, über das Betätigungsmittel 34 die Montagekraft auf die Fixiervorrichtung 18 ausgeübt, sodass diese in Richtung der Pfeile 24 verlagert wird. Dabei wird eine Verlagerung des Betätigungsmittels 34 in Richtung des Pfeils 35 vorgenommen, welche von der Ventilanordnung 6 beziehungsweise dem Ventilgehäuse 8 fortgerichtet ist.

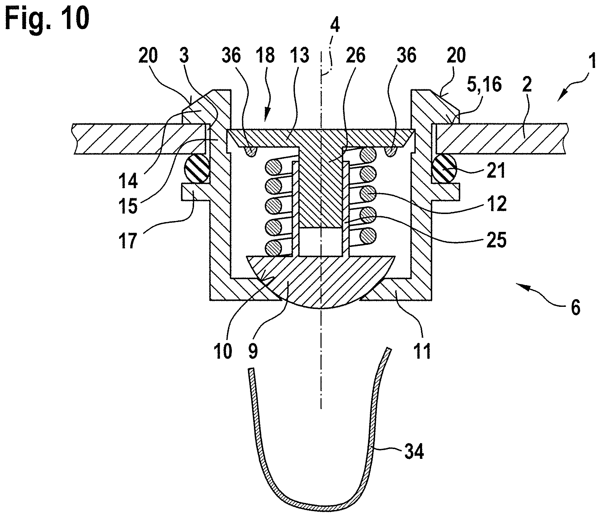

Die Figur 10 zeigt die fluidtechnische Einrichtung sowie die Ventilanordnung 6 nach der Montage. Beispielsweise ist es vorgesehen, dass das Betätigungsmittel 34 über wenigstens eine Sollbruchstelle 36, in dem hier dargestellten Ausführungsbeispiel zwei Sollbruchstellen 36, an der Fixiervorrichtung 18 befestigt ist. Die Sollbruchstelle 36 ist derart ausgelegt, dass sie einem Aufbringen der Montagekraft, welche der Verlagerung der Fixiervorrichtung 18 in ihre Fixierstellung dient, standhält. Wird jedoch eine Kraft aufgebracht, welche die Montagekraft übersteigt, insbesondere um mindestens 25 %, mindestens 50 %, mindestens 75 % oder mindestens 100 %, übersteigt, so löst sich das Betätigungsmittel 34 an der Sollbruchstelle 36 von der Fixiervorrichtung 18.

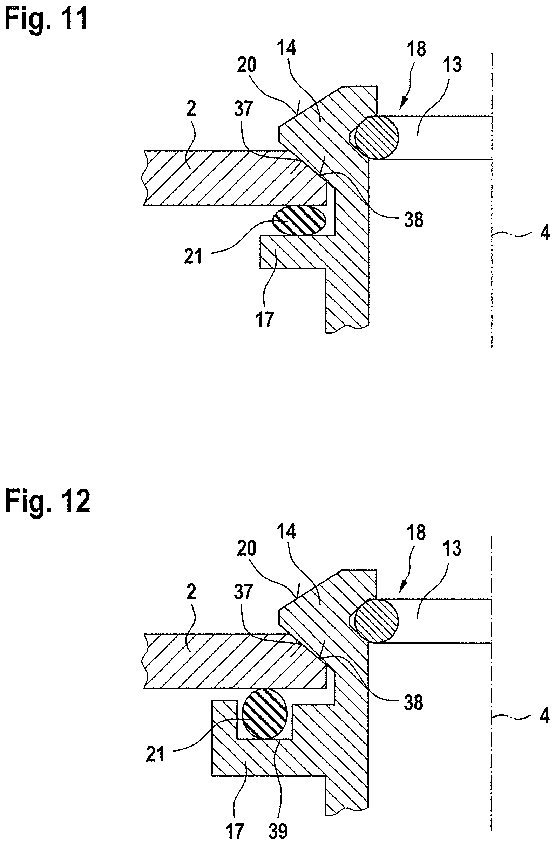

Die Figur 11 zeigt eine erste Anordnungsvariante der Dichtung 21, welche zwischen dem Gegenlager 17 und der Wand vorliegt. Beispielsweise weist die Dichtung 21 einen Rechteckquerschnitt auf. Weiterhin kann es vorgesehen sein, dass wenigstens eines der Hintergriffsrastelemente 14, vorzugsweise mehrere der Hintergriffsrastelemente 14 beziehungsweise alle der Hintergriffsrastelemente 14 neben der optionalen Schrägfläche 20 eine (ebenso optionale) Schrägfläche 37 aufweist. Diese wirkt mit der Wand 2 beziehungsweise dem Rand 5 zusammen, um die Ventilanordnung 6 in Montagerichtung weiter in die Aufnahmeöffnung 3 zu drängen. Beispielsweise kann die Schrägfläche 37 mit einer Gegenfläche 38 der Wand 2 zusammenwirken.

Durch das Hineindrängen der Ventilanordnung 6 in Montagerichtung in die Aufnahmeöffnung 3 wird die Dichtung 21 zwischen dem Gegenlager 17 und der Wand 2 verspannt, sodass die Dichtung 21 einerseits dichtend an dem Gegenlager 17 beziehungsweise dem Ventilgehäuse 8 und andererseits dichtend an der fluidtechnischen Einrichtung 1, insbesondere der Wand 2, anliegt. Hierdurch wird die Dichtigkeit der Verbindung zwischen der Ventilanordnung 6 und der fluidtechnischen Einrichtung 1 weiter verbessert.

Die Figur 12 zeigt eine zweite Anordnungsvariante der Dichtung 21. Auf die vorstehenden Ausführungen wird ausdrücklich Bezug genommen und nachfolgend im Wesentlichen auf die Unterschiede hingewiesen. Die Dichtung 21 ist in einer Ausnehmung 39, welche auch als Dichtungsaufnahme bezeichnet werden kann, angeordnet. Die Ausnehmung 39 verhindert ein Abrutschen der Dichtung 21, insbesondere vor der Montage, jedoch auch nach der Montage der Ventilanordnung 1 an der fluidtechnischen Einrichtung 1. Die Dichtung 21 kann, wie hier dargestellt, als O-Ring ausgestaltet sein. Selbstverständlich kann sie jedoch jede beliebige Form aufweisen, also beispielsweise mehreckig, insbesondere viereckig beziehungsweise rechteckig, sein.

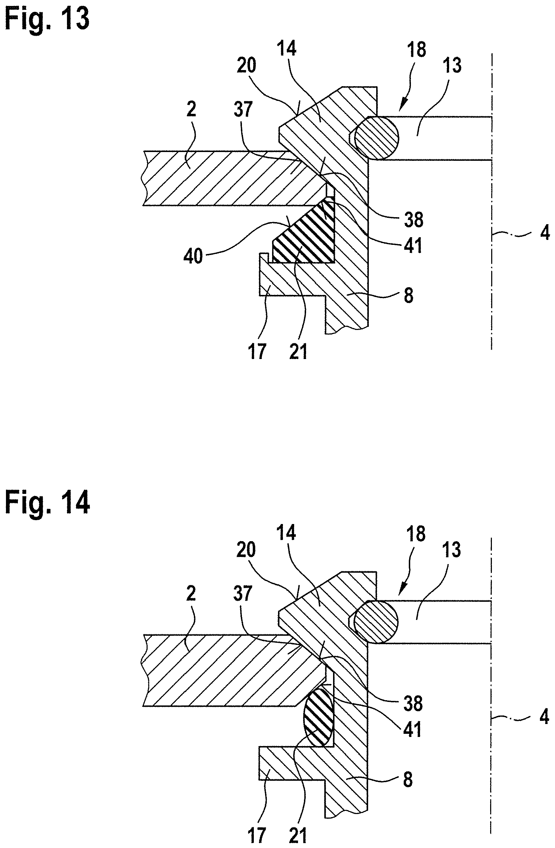

Die Figur 13 zeigt eine dritte Anordnungsvariante der Dichtung 21. Die Dichtung 21 ist wenigstens bereichsweise kegelförmig ausgestaltet und weist hierbei einen Konus 40 auf, der an einer Fase 41 der Wand 2 beziehungsweise des Rands 5 der Aufnahmeöffnung 3 anliegt. Der Konus 40 und die Fase 41 sind dabei derart ausgebildet, dass die Dichtung 21 in radialer Richtung umso stärker nach innen gegen das Ventilgehäuse 8 gedrängt wird, umso weiter die Ventilanordnung 6 in Montagerichtung in die Aufnahmeöffnung 3 eingebracht wird, wobei dies beispielsweise durch das Zusammenwirken der Schrägfläche 37 mit der Gegenfläche 38 erfolgt.

Die Figur 14 zeigt eine vierte Anordnungsvariante der Dichtung 21. Diese ist dabei wiederum vorzugsweise als O-Ring ausgeführt und liegt an dem Ventilgehäuse 8, dem Gegenlager 17 sowie der Fase 41 der Wand 2 an. Auch bei einer derartigen Ausgestaltung wird die Dichtung 21 umso stärker gegen das Ventilgehäuse 8 gedrängt, je weiter die Ventilanordnung 6 in Montagerichtung in die Aufnahmeöffnung 3 verlagert wird. Entsprechend wird die Dichtwirkung verbessert.

Alle der genannten Anordnungsvarianten der Dichtung 21 sind grundsätzlich jeweils für alle beschriebenen Ausführungsformen der Ventilanordnung 6 verwendbar.

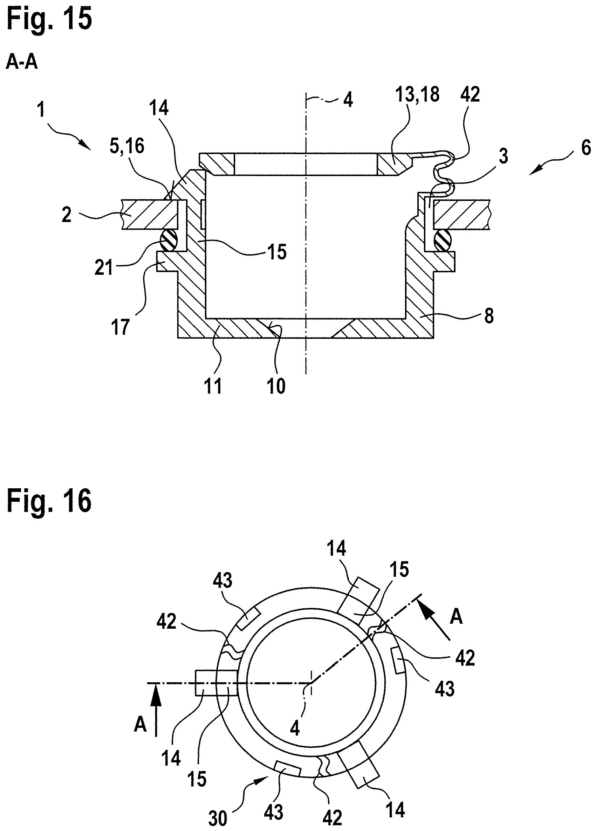

Die Figur 15 zeigt eine vereinfachte Längsschnittdarstellung durch die Ventilanordnung 6 in einer ersten Ausgestaltungsvariante, wobei der Schnitt auf der rechten Seite der Längsmittelachse 4 an einem Schnittwinkel vorliegt, welcher um eine von 180° verschiedene Winkeldifferenz von dem Schnittwinkel auf der linken Seite der Längsmittelachse 4 verschieden ist. Grundsätzlich können die nachfolgend beschriebenen Merkmale der ersten Ausgestaltungsvariante auf alle der vorstehend beschriebenen Ausführungsformen der Ventilanordnung 6 angewandt werden.

Es ist erkennbar, dass die Fixiervorrichtung 18, hier also der Federhalter 13, einstückig mit dem Ventilgehäuse 8 ausgebildet ist, beispielsweise also an diesen angespritzt ist. Die Verbindung zwischen dem Ventilgehäuse 8 und der Fixiervorrichtung 18 ist über eine flexible Verbindung 42 realisiert, welche vorzugsweise eine Verlagerung der Fixiervorrichtung 18 aus der Freigabestellung in die Fixierstellung flexibel und reversibel, also ohne plastische Verformung beziehungsweise Beschädigung, zulässt. Die Verbindung 42 liegt insoweit dauerhaft zwischen dem Ventilgehäuse 8 und der Fixiervorrichtung 18 vor.

Die Figur 16 zeigt eine Querschnittsdarstellung der Ventilanordnung 6 in der ersten Ausgestaltungsvariante gemäß den vorstehenden Ausführungen. Dabei wird deutlich, dass mehrere der Verbindungen 42 vorgesehen sind, welche zudem über den Umfang der Ventilanordnung 6 verteilt angeordnet sind, insbesondere gleichmäßig verteilt. Lediglich schematisch dargestellt sind mehrere Hintergriffsrastelemente 14 mit den dazugehörigen Rastarmen 15 sowie mehrere Rastelemente 43 der Rasteinrichtung 30.

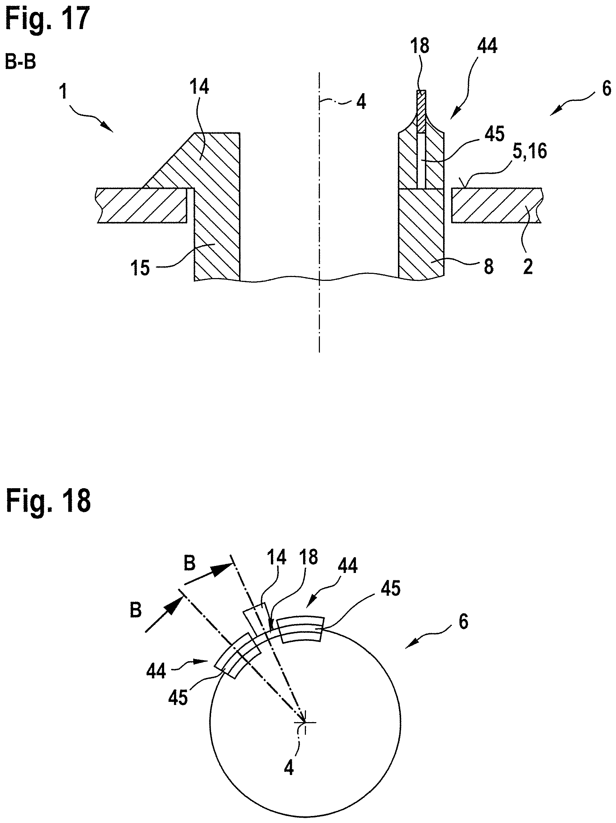

Die Figur 17 zeigt eine weitere Ausgestaltungsvariante der Ventilanordnung 6, wobei in der dargestellten Längsschnittdarstellung wiederum der Schnitt der linken Seite an einem Schnittwinkel vorliegt, welche von dem Schnittwinkel des Schnitts der rechten Seite um eine von 180° verschiedene Winkeldifferenz abweicht. Gezeigt ist eine Führungseinrichtung 44, in welcher die Fixiervorrichtung 18 in Umfangsrichtung gesehen wenigstens bereichsweise angeordnet ist. Durch das Vorsehen der Führungseinrichtung 44, in welcher insbesondere eine Führungsnut 45 für die Fixiervorrichtung 18 vorliegt, kann die Haltewirkung der Fixiervorrichtung 18 auf die Hintergriffsrastelemente 14 weiter verbessert werden. Auch diese Ausgestaltungsvariante kann auch alle Ausführungsformen der Ventilanordnung 6 übertragen werden.

Die verbesserte Haltewirkung wird anhand der Figur 18 erläutert, welche eine Querschnittsdarstellung der Ventilanordnung 6 schematisch zeigt. Es wird deutlich, dass benachbart zu einem Hintergriffsrastelement 14 zwei Führungseinrichtungen 44 mit Führungsnuten 45 für die Fixiervorrichtung 18 aufweisen. Bevorzugt grenzen die Führungseinrichtungen 44 in Umfangsrichtung unmittelbar an das Hintergriffsrastelement 14 an. Beispielsweise sind in Umfangsrichtung stets abwechselnd ein Hintergriffsrastelement 14 und eine Führungseinrichtung 44 mit einer Führungsnut 45 vorgesehen.

Die Führungseinrichtungen 44 stützen die Fixiervorrichtung 18 in radialer Richtung ab. Entsprechend wird eine von dem Hintergriffsrastelement 14 ausgeübte, in radialer Richtung nach innen weisende Kraft über die Fixiervorrichtung 18 in die Führungseinrichtungen 44 und mithin das Ventilgehäuse 8 eingeleitet. Aufgrund der Steifigkeit des Ventilgehäuses 8 wird somit eine Verformung der Fixiervorrichtung 18 unterbunden und so die Haltewirkung auf die Hintergriffsrastelemente 14 verbessert. Die Führungseinrichtungen 44 beziehungsweise das Ventilgehäuse 8 dienen insoweit als Gegenlager für die Fixiervorrichtung 18.

Die Ventilanordnung 6 gemäß den vorstehenden Ausführungen, in einer beliebigen der verschiedenen Ausführungsformen, ermöglicht eine schnelle und einfache Befestigung an der fluidtechnischen Einrichtung 1, insbesondere durch einfaches Einklipsen der Ventilanordnung 6 in die Aufnahmeöffnung 3 und nachfolgendes Verlagern der Fixiervorrichtung 18 in die Fixierstellung. Anschließend ist die Ventilanordnung 6 sicher und dauerhaft in der Aufnahmeöffnung 3 beziehungsweise an der fluidtechnischen Einrichtung 1 gehalten.

Dies ist auch der Fall, falls die Ventilanordnung 6 und die fluidtechnische Einrichtung 1 beziehungsweise deren Wand 2 aus unterschiedlichen Materialien beziehungsweise aus Materialien mit unterschiedlichen Wärmeausdehnungskoeffizienten bestehen sollten. Durch die Hintergriffsverbindung zwischen der Ventilanordnung 6 und der fluidtechnischen Einrichtung 1 können unterschiedliche Verformungen der fluidtechnischen Einrichtung 1 und der Ventilanordnung 6 ausgeglichen und das Auftreten von Spannungen, insbesondere thermischen Spannungen, zwischen der Ventilanordnung 6 und der fluidtechnischen Einrichtung 1 verringert oder sogar gänzlich vermieden werden.

## Patentansprüche

1. Ventilanordnung (6) mit einem Ventilgehäuse (8), in dem ein von einer Feder (12) federkraftbeaufschlagtes Ventilelement (9) bezüglich eines einen Ventilsitz (10) aufweisenden Ventilsitzelements (11) verlagerbar angeordnet ist, das in einer Geschlossenstellung mit dem Ventilsitz (10) zum Unterbrechen einer Strömungsverbindung durch das Ventilgehäuse (8) zusammenwirkt und die Strömungsverbindung in einer Offenstellung freigibt, wobei sich die Feder (12) an einem in dem Ventilgehäuse (8) angeordneten Federhalter (13) abstützt, **dadurch gekennzeichnet, dass** das Ventilgehäuse (8) Hintergriffsrastelemente (14) aufweist, mittels welchen die Ventilanordnung (6) in einer Aufnahmeöffnung (3) einer fluidtechnischen Einrichtung (1) rastend befestigbar ist, wobei die Hintergriffsrastelemente (14) in radialer Richtung bezüglich einer Längsmittelachse (4) des Ventilgehäuses (8) zwischen einer Raststellung, in der sie ein der Aufnahmeöffnung (3) zugeordnetes Rastgegenelement (16) hintergreifen, und einer Montagestellung, in der sie außer Eingriff mit dem Rastgegenelement (16) stehen, elastisch verlagerbar sind, wobei die Hintergriffsrastelemente (14) mittels einer Fixiervorrichtung (18) in der Raststellung festsetzbar sind.

2. Ventilanordnung nach Anspruch 1, **dadurch gekennzeichnet, dass** die Fixiervorrichtung (18) in axialer Richtung zwischen einer Freigabestellung, in der eine radiale Verlagerung der Hintergriffsrastelemente (14) in die Montagestellung zugelassen ist, und einer Fixierstellung, in der die Hintergriffsrastelemente (14) in radialer Richtung festgesetzt sind, verlagerbar ist.

3. Ventilanordnung nach einem der vorhergehenden Ansprüche, **dadurch gekennzeichnet, dass** der Federhalter (13) oder das Ventilsitzelement (11) als Fixiervorrichtung (18) vorliegt, wobei der Federhalter (13) und das Ventilsitzelement (11) gegeneinander verlagerbar sind, sodass der Federhalter (13) und das Ventilsitzelement (11) in der Freigabestellung der Fixiervorrichtung (18) einen ersten Abstand voneinander aufweisen und in der Fixierstellung einen von dem ersten Abstand verschiedenen zweiten Abstand.

4. Ventilanordnung nach einem der vorhergehenden Ansprüche, **dadurch gekennzeichnet, dass** die Fixiervorrichtung (18) separat von dem Ventilgehäuse (8) ausgebildet und in dieses eingesetzt ist, oder dass die Fixiervorrichtung (18) einstückig und/oder materialeinheitlich mit dem Ventilgehäuse (8) ausgestaltet ist.

5. Ventilanordnung nach einem der vorhergehenden Ansprüche, **dadurch gekennzeichnet, dass** das Ventilelement (9) ein Führungselement (25) und der Federhalter (13) ein Führungsgegenelement (26) aufweist, wobei das Führungselement (25) und das Führungsgegenelement (26) zur Führung des Ventilelements (9) bezüglich des Federhalters (13), insbesondere in axialer Richtung, miteinander zusammenwirken.

6. Ventilanordnung nach einem der vorhergehenden Ansprüche, **dadurch gekennzeichnet, dass** das Ventilsitzelement (11) ortsfest an dem Ventilgehäuse (8) vorliegt und der Federhalter (13) durch Aufbringen einer Montagekraft auf das Ventilelement (9), insbesondere durch den Ventilsitz (10) hindurch, aus der Freigabestellung in die Fixierstellung verlagerbar ist.

7. Ventilanordnung nach einem der vorhergehenden Ansprüche, **dadurch gekennzeichnet, dass** sich das Ventilelement (9) bei Aufbringen der Montagekraft über die Feder (12) und/oder das Führungselement (25) an dem Federhalter (13) abstützt.

8. Ventilanordnung nach einem der vorhergehenden Ansprüche, **dadurch gekennzeichnet, dass** die Hintergriffsrastelemente (14) an in Umfangsrichtung voneinander beabstandeten Rastarmen (15) vorliegen, wobei die Fixiervorrichtung (18) Radialvorsprünge (29) aufweist, die in zwischen den Rastarmen (15) vorliegende Zwischenräume (28) eingreifen.

9. Ventilanordnung nach einem der vorhergehenden Ansprüche, **dadurch gekennzeichnet, dass** die Fixiervorrichtung (18) in der Freigabestellung und/oder der Fixierstellung mittels einer Rasteinrichtung (30) rastend gehalten ist, und/oder dass die Fixiervorrichtung (18) in der Freigabestellung über eine Sollbruchstelle mit dem Ventilgehäuse (8) verbunden ist.

10. Ventilanordnung nach einem der vorhergehenden Ansprüche, **dadurch gekennzeichnet, dass** die Hintergriffsrastelemente (14) jeweils eine Schrägfläche (37) aufweisen, die bei einer Verlagerung der Hintergriffsrastelemente (14) in Richtung der Raststellung die Ventilanordnung (6) in die Aufnahmeöffnung (3) hineindrängen und/oder die Ventilanordnung (6) an eine zwischen der Ventilanordnung (6) und der fluidtechnischen Einrichtung (1) angeordnete Dichtung (21) drängt.

## Claims

1. Valve arrangement (6), comprising a valve housing (8) in which a valve element (9) loaded with spring force by a spring (12) is arranged displaceably with respect to a valve seat element (11), which has a valve seat (10), and which in a closed position cooperates with the valve seat (10) to interrupt a flow connection through the valve housing (8) and in an open position releases the flow connection, the spring (12) being braced on a spring holder (13) arranged in the valve housing (8), **characterised in that** the valve housing (8) has rear engagement latch elements (14), by means of which the valve arrangement (6) can be fixed by latching in a receiving opening (3) of a fluidic device (1), the rear engagement latch elements (14) being elastically displaceable in the radial direction with respect to a longitudinal central axis (4) of the valve housing (8) between a latching position, in which they engage a latch counter element (16) assigned to the receiving opening (3) from behind, and a mounting position, in which they are disengaged from the latch counter element (16), the rear engagement latch elements (14) being fixable in the latching position by means of a fixing device (18).

2. Valve arrangement according to claim 1, **characterised in that** the fixing device (18) is displaceable in the axial direction between a release position, in which radial displacement of the rear engagement latch elements (14) into the mounting position is enabled, and a fixing position, in which the rear engagement latch elements (14) are fixed in the radial direction.

3. Valve arrangement according to any of the preceding claims, **characterised in that** the spring holder (13) or the valve seat element (11) is in the form of the fixing device (18), the spring holder (13) and the valve seat element (11) being displaceable with respect to one another in such a way that the spring holder (13) and the valve seat element (11) are at a first distance from one another in the release position of the fixing device (18) and at a second distance, different from the first distance, in the fixing position.

4. Valve arrangement according to any of the preceding claims, **characterised in that** the fixing device (18) is formed separately from the valve housing (8) and inserted into it, or **in that** the fixing device (18) is configured in a single piece with and/or in the same material as the valve housing (8).

5. Valve arrangement according to any of the preceding claims, **characterised in that** the valve element (9) has a guide element (25) and the spring holder (13) has a guide counter element (26), the guide element (25) and the guide counter element (26) cooperating with one another to guide the valve element (9) with respect to the spring holder (13), in particular in the axial direction.

6. Valve arrangement according to any of the preceding claims, **characterised in that** the valve seat element (11) is fixed in position on the valve housing (8), and the spring holder (13) is displaceable from the release position into the fixing position by applying a mounting force to the valve element (9), in particular through the valve seat (10).

7. Valve arrangement according to any of the preceding claims, **characterised in that** the valve element (9) is braced on the spring holder (13) via the spring (12) and/or the guide element (25) when the mounting force is applied.

8. Valve arrangement according to any of the preceding claims, **characterised in that** the rear engagement latch elements (14) are positioned on latch arms (15) which are spaced apart from one another in a peripheral direction, the fixing device (18) having radial projections (29) which engage in gaps (28) positioned between the latch arms (15).

9. Valve arrangement according to any of the preceding claims, **characterised in that** the fixing device (18) is held in the release position and/or the fixing position by latching by means of a latch device (30), and/or **in that** the fixing device (18) is connected to the valve housing (8) via a predetermined breaking point in the release position.

10. Valve arrangement according to any of the preceding claims, **characterised in that** the rear engagement latch elements (14) each have an oblique face (37) which, when the rear engagement latch elements (14) are displaced towards the latch position, urge the valve arrangement (6) into the receiving opening (3) and/or urge the valve arrangement (6) against a seal (21) arranged between the valve arrangement (6) and the fluidic device (1).

## Revendications

1. Agencement de vanne (6) comprenant un boîtier de vanne (8), dans lequel un élément de vanne (9) soumis à l'action d'une force de ressort par un ressort (12) est disposé de manière déplaçable par rapport à un élément de siège de vanne (11) comportant un siège de vanne (10), ledit élément de vanne (9) coopérant dans une position fermée avec le siège de vanne (10) pour interrompre une liaison d'écoulement à travers le boîtier de vanne (8) et libérant la liaison d'écoulement dans une position ouverte, le ressort (12) s'appuyant sur un support de ressort (13) disposé dans le boîtier de vanne (8), **caractérisé en ce que** le boîtier de vanne (8) comporte des éléments d'encliquetage par l'arrière (14), au moyen desquels l'agencement de vanne (6) peut être fixé par encliquetage dans une ouverture de réception (3) d'un dispositif fluidique (1), les éléments d'encliquetage par l'arrière (14) pouvant être déplacés de manière élastique dans la direction radiale par rapport à un axe médian longitudinal (4) du boîtier de vanne (8) entre une position d'encliquetage, dans laquelle ils saisissent par l'arrière un élément antagoniste d'encliquetage (16) associée à l'ouverture de réception (3), et une position de montage, dans laquelle ils ne sont pas en prise avec l'contre-élément d'encliquetage (16), les éléments d'encliquetage par l'arrière (14) pouvant être fixés dans la position d'encliquetage au moyen d'un dispositif de fixation (18).

2. Agencement de vanne selon la revendication 1, **caractérisé en ce que** le dispositif de fixation (18) peut être déplacé dans la direction axiale entre une position de libération, dans laquelle un déplacement radial des éléments d'encliquetage par l'arrière (14) dans la position de montage est permis, et une position de fixation, dans laquelle les éléments d'encliquetage par l'arrière (14) sont fixés dans la direction radiale.

3. Agencement de vanne selon l'une des revendications précédentes, **caractérisé en ce que** le support de ressort (13) ou l'élément de siège de vanne (11) se présente sous la forme du dispositif de fixation (18), le support de ressort (13) et l'élément de siège de vanne (11) pouvant être déplacés l'un vers l'autre, de sorte que le support de ressort (13) et l'élément de siège de vanne (11) présentent une première distance entre eux dans la position de libération du dispositif de fixation (18) et une seconde distance différente de la première distance dans la position de fixation.

4. Agencement de vanne selon l'une des revendications précédentes, **caractérisé en ce que** le dispositif de fixation (18) est réalisé séparément du boîtier de vanne (8) et placé dans celui-ci, ou **en ce que** le dispositif de fixation (18) est conçu d'un seul tenant avec le boîtier de vanne (8) et/ou dans le même matériau que celui-ci.

5. Agencement de vanne selon l'une des revendications précédentes, **caractérisé en ce que** l'élément de vanne (9) comporte un élément de guidage (25) et le support de ressort (13) comporte un contre-élément de guidage (26), l'élément de guidage (25) et l'contre-élément de guidage (26) coopérant l'un avec l'autre pour le guidage de l'élément de vanne (9) par rapport au support de ressort (13), en particulier dans la direction axiale.

6. Agencement de vanne selon l'une des revendications précédentes, **caractérisé en ce que** l'élément de siège de vanne (11) est fixé à demeure sur le boîtier de vanne (8) et le support de vanne (13) peut être déplacé de la position de libération à la position de fixation en appliquant une force de montage sur l'élément de vanne (9), en particulier à travers le siège de vanne (10).

7. Agencement de vanne selon l'une des revendications précédentes, **caractérisé en ce que** l'élément de vanne (9) s'appuie sur le support de ressort (13) lors de l'application de la force de montage par le biais du ressort (12) et/ou de l'élément de guidage (25).

8. Agencement de vanne selon l'une des revendications précédentes, **caractérisé en ce que** les éléments d'encliquetage par l'arrière (14) se trouvent sur des bras d'encliquetage (15) espacés les uns des autres dans la direction circonférentielle, le dispositif de fixation (18) comportant des saillies radiales (29), qui viennent en prise dans les espaces (28) se trouvant entre les bras d'encliquetage (15).

9. Agencement de vanne selon l'une des revendications précédentes, **caractérisé en ce que** le dispositif de fixation (18) est maintenu par encliquetage dans la position de libération et/ou la position de fixation au moyen d'un dispositif d'encliquetage (30), et/ou **en ce que** le dispositif de fixation (18) est relié, dans la position de libération, au boîtier de vanne (8) par le biais d'un point destiné à la rupture.

10. Agencement de vanne selon l'une des revendications précédentes, **caractérisé en ce que** les éléments d'encliquetage par l'arrière (14) comportent respectivement une surface inclinée (37), qui, lors d'un déplacement des éléments d'encliquetage par l'arrière (14) dans la direction de la position d'encliquetage, pousse l'agencement de vanne (6) dans l'ouverture de réception (3) et/ou pousse l'agencement de vanne (6) sur un joint d'étanchéité (21) disposé entre l'agencement de vanne (6) et le dispositif fluidique (1).
